# EUROPEAN PATENT APPLICATION

(11) **EP 1 126 424 A2**
(43) Date of publication of application: **22.08.2001**
(21) Application number: 00128657.4
(22) Date of filing: 28.12.2000
(51) Int. Cl.: G07F 17/16, G06F 17/60, H04L 12/14, H04M 17/02

(54) **Digital content billing system using networks**

(30) Priority: 28.01.2000 JP 2000020770
(71) Applicant: MITSUBISHI DENKI KABUSHIKI KAISHA, Tokyo 100-8310 (JP)
(72) Inventor: Yamanaka, Hideaki, Chiyoda-ku, Tokyo 100-8310 (JP); Moriyama, Teruhiko, Chiyoda-ku, Tokyo 100-8310 (JP); Kikuchi, Katsuaki, Chiyoda-ku, Tokyo 100-8310 (JP)
(74) Representative: Bohnenberger, Johannes, Dr.

(57) **Abstract**

An administrator contracts with an advertiser and a holder holding a right to let a third person use digital content. The holder sets the digital content to become usable by using an execution key, downloads the execution key to the administrator through a network, and downloads the digital content not made usable to a distributor through the network. The distributor downloads the digital content to a user through the network. When the user sends an execution declaration of the digital content to the administrator, the administrator downloads the execution key and an advertising information piece received from the advertiser to the user through the network. Therefore, the user can use the digital content made usable by the execution key while seeing the advertising information piece. Thereafter, the administrator collects an advertisement rate corresponding to the number of execution times of the digital content from the advertiser and pays an execution fee corresponding to the number of execution times of the digital content to the holder. Accordingly, the user can enjoy a desired digital content without charge, and the administrator is not required to collect the execution fee from each of many users.

## Description

### BACKGROUND OF THE INVENTION

### Field of the Invention

The present invention relates to a digital content billing system in which digital content such as music files, video files and game software titles is downloaded to a plurality of users through networks and a billing for each downloaded digital content is performed according to the number of execution times of the downloaded digital content.

### Description of Related Art

As a charge collecting system for collecting a charge for fee-charging software such as a computer program, video files or the like according to the number of execution times or an execution time period of the fee-charging software, "Software Management System" disclosed in the Published Unexamined Japanese Patent Application No. H6-95302 of 1994 is known. In this software management system, an identifier code of used software, a user identifier code of a user and a fee for the software are recorded. A person holding the copyright of the software grasps an execution condition of the software by collecting the identifier code, the user identifier code and the fee, an execution fee for the software is determined according to the number of execution times of the software, and the execution fee is collected from the user.

However, advertising information cannot be included in the software management system of the above application. A publisher, however, can receive an advertising request from an advertiser. The publisher inserts an advertisement in magazines or newspapers and collects an advertisement rate from the advertiser. Therefore, a price of the magazine or newspaper can be lowered. However, in case of software, a software downloading fee cannot be lowered. Therefore, the software user has to pay a total software execution fee charged by a software provider.

Also, "Information Accounting System" disclosed in the Published Unexamined Japanese Patent Application No. H9-114755 of 1997 is known. In this information accounting system, advertising information of an advertiser is provided for a user when the user uses digital information of an information provider, a portion of an execution fee for the digital information is covered with an advertisement rate for the advertising information, the execution fee collected from the user using the digital information is reduced by the portion of the execution fee, so that the execution fee is reduced. Therefore, the execution and distribution of the digital information are moreover accelerated.

However, in the information accounting system of the above application, the information provider collects the digital information execution fee from both the user using the digital information and the advertiser providing the advertising information. Therefore, there is a problem that the accounting system becomes complicated.

Also, in the dealings of the information provider with a plurality of users widely dispersed all over their country (or countries), the information provider does not personally see each of the users, but the information provider has to deal with the users connected to the information provider through subscriber lines. Therefore, there is another problem that the collecting of money from each user as the execution fee is a hard work for the information provider.

Also, a usual payment method allows users to pay the execution fee to the information provider after the use of the digital information. Therefore, there can be a case that a user does not pay the execution fee to the information provider though the user did use the digital information, so that there is a probability that the information provider cannot collect the execution fee from some users.

### SUMMARY OF THE INVENTION

An object of the present invention is to provide, with due consideration to the drawbacks of the conventional software managing system and the conventional information accounting system, a digital content billing system using a network in which a billing of digital content is easily performed while accelerating the use of digital content and an execution fee for digital content is reliably collected.

The object of the present invention is achieved by the provision of a digital content billing system using a network, comprising:
a holder for having digital content copyright and holding a right to let a third person use the digital content;
a distributor for obtaining the digital content from the holder and distributing the digital content to a user;
an advertiser for possessing an advertising information piece to be provided for the user; and
an administrator for obtaining the advertising information piece from the advertiser, receiving an execution declaration of the digital content from the user, downloading the advertising information piece and a permission for the execution declaration to the user through the network, collecting an advertisement rate, which corresponds to the number of execution times of the digital content used by the user, from the advertiser and paying an execution fee, which corresponds to the number of execution times of the digital content, to the holder.

In the above configuration, the distributor distributes the digital content obtained from the holder to the user. Also, the administrator receives the advertising information piece from the advertiser. When the user sends the execution declaration of the digital content to the administrator, the administrator downloads the advertising information piece and a permission for the execution declaration to the user to permit the user to use the digital content and, for example, to insert the advertising information piece in the digital content. Therefore, the user can enjoy the digital content while seeing the advertising information piece. This procedure is repeatedly performed to make the user use the digital content prescribed times.

Thereafter, the administrator collects an advertisement rate, which corresponds to the number of execution times of the digital content from the advertiser. Also, the administrator pays an execution fee, which corresponds to the number of execution times of the digital content, to the holder.

Accordingly, the user can execute a desired digital content without charge, and the holder can make many users use digital content held by the holder and can collects an execution fee corresponding to the number of execution times of the digital content. Also, the administrator is not required to collect the execution fee from each of many users even though the users execute the digital content, so that the administrator can be released from a troublesome work in which the administrator collects the execution fee from each of many users. Also, the advertiser can efficiently provide the advertising information piece to many users.

The object of the present invention is also achieved by the provision of a digital content billing system using a network, comprising:
a holder for having digital content, which is set to become usable by an execution key, and holding a right to let a third person use the digital content;
a distributor for obtaining the digital content from the holder and distributing the digital content to a user;
an advertiser for possessing an advertising information piece to be provided for the user; and
an administrator for obtaining the execution key from the holder, obtaining the advertising information piece from the advertiser, receiving an execution declaration of the digital content from the user, downloading the advertising information piece and the execution key to the user through the network, collecting an advertisement rate, which corresponds to the number of execution times of the digital content used by the user, from the advertiser and paying an execution fee, which corresponds to the number of execution times of the digital content, to the holder.

In the above configuration, the distributor distributes the digital content obtained from the holder to the user. Also, the administrator receives the advertising information piece from the advertiser. Also, the administrator receives the execution key from the holder. When the user sends the execution declaration of the digital content to the administrator, the administrator downloads the advertising information piece and the execution key to the user to permit the user to use the digital content made usable by the execution key and, for example, to insert the advertising information piece in the digital content. Therefore, the user can enjoy the digital content while seeing the advertising information piece. This procedure is repeatedly performed to make the user use the digital content prescribed times.

Thereafter, the administrator collects an advertisement rate, which corresponds to the number of execution times of the digital content from the advertiser. Also, the administrator pays an execution fee, which corresponds to the number of execution times of the digital content, to the holder.

Accordingly, the user can enjoy a desired digital content without charge, and the holder can make many users use digital content held by the holder and can collects an execution fee corresponding to the number of execution times of the digital content. Also, the administrator is not required to collect the execution fee from each of many users even though the users use the digital content, so that the administrator can be released from a troublesome work in which the administrator collects the execution fee from each of many users. Also, the advertiser can efficiently provide the advertising information piece to many users.

It is preferred that the advertising information piece downloaded to the user is displayed simultaneously with the digital content in cases where the user uses the digital content by using the execution key downloaded to the user.

Because the advertising information piece is displayed simultaneously with the digital content, the advertiser can efficiently make the user see the advertising information piece.

It is also preferred that the advertising information piece downloaded to the user is displayed in a time period between time periods in which the digital content is displayed in cases where the user uses the digital content by using the execution key downloaded to the user.

Because the advertising information piece is displayed in a time period between time periods in which the digital content is displayed, the advertiser can efficiently make the user see the advertising information piece.

It is also preferred that the distributor notifies the holder of the number of download times of the digital content downloaded to the user, and the holder pays a download charge, which corresponds to the number of download times of the digital content, to the distributor.

Because the distributor notifies the holder of the number of download times of the digital content downloaded to the user, the distributor can reliably collect the download charge from the holder.

It is also preferred that the administrator downloads a plurality of advertising information pieces and the execution key, which permits the user to use the digital content prescribed times, to the user in cases where the administrator receives the execution declaration of the digital content from the user.

Because it is not required that the user sends the execution declaration to the administrator each time the user uses the digital content, the user can reduce a troublesomeness of the sending of the execution declaration, and a waiting time period from the sending of the execution declaration to the receiving of the execution key can be shortened.

It is also preferred that the user uses the digital content by using an execution key downloaded from the administrator in the past while seeing an advertising information piece downloaded from the administrator in the past in cases where the execution key is not currently downloaded to the user from the administrator because of an abnormal state even though a prescribed time passes after the user sends the execution declaration of the digital content.

In cases where the user cannot be connected to the administrator because of the occurrence of an abnormal state when the user tries to send the execution declaration to the administrator, the user can use the digital content, which is made usable by using an execution key downloaded in the past, while seeing an advertising information piece downloaded with the execution key in the past. Therefore, even though the abnormal state occurs in the digital content billing system using the network, the user can reliably use the digital content.

It is also preferred that the user notifies the administrator that the user uses the digital content by using the execution key downloaded from the administrator in the past after the abnormal state is finished.

Because the use of the digital content by using the execution key downloaded in the past is performed in an offline operation, the administrator can accurately grasp the number of execution times of the digital content used in the offline operation.

It is also preferred that the advertising information piece downloaded from the administrator to the user corresponds to content of the digital content.

Because the user can see the advertising information piece in which the user takes an interest, there is no probability that the user feels a pain given by seeing an advertising information piece in which the user takes no interest. Also, the advertiser can efficiently makes the user see the advertising information piece in which the user takes an interest.

It is also preferred that the administrator inquires the user of a genre of the advertising information piece to be downloaded to the user in cases where the administrator receives the execution declaration of the digital content from the user, and the advertising information piece, of which a genre is selected by the user, is downloaded to the user.

Because the user selects his desired genre of the advertising information piece to be downloaded to the user, the advertiser can efficiently makes the user see the advertising information piece in which the user takes an interest. Also, there is no probability that the user feels a pain given by seeing an advertising information piece in which the user takes no interest.

It is also preferred that the administrator downloads the advertising information piece, which corresponds to content of another digital content used by the user in the past, to the user in cases where the administrator receives the execution declaration of the digital content from the user.

Because tastes and interests of the user can be correctly grasped according to the content of the digital content used by the user in the past, there is no probability that the user sees an advertising information piece in which the user takes no interest, so that there is no probability that the user feels a pain given by seeing an advertising information piece in which the user takes no interest. Also, the advertiser can efficiently makes the user see the advertising information piece in which the user takes an interest.

It is also preferred that the administrator collects the advertisement rate, which is determined according to a matching point between content of the digital content related to the execution declaration of the user and content of the advertising information piece downloaded from the administrator to the user, from the advertiser.

As a matching point becomes high, the interest of the user for the advertising information piece becomes high. Therefore, in cases where the administrator downloads the advertising information piece corresponding to a high matching point, the administrator can collects a high advertisement rate for the advertising information piece from the advertiser. Also, because the advertiser pays the advertisement rate for the advertising information piece corresponding to a high matching point to the administrator, there is no probability that the advertiser pays a high advertisement rate for an advertising information piece related to a low matching point. Therefore, the advertiser can rely on the administrator without anxiety to download the advertising information piece.

It is also preferred that the administrator guarantees the advertiser the lowest number of downloading times of the advertising information piece downloaded to the user or a lowest ratio of the number of downloading times of the advertising information piece downloaded to the user to the number of downloading times of all advertising information pieces received from the advertiser.

Because the lowest number of downloading times of the advertising information piece or the lowest ratio of the number of downloading times of the advertising information piece to the total downloading number, the advertiser can expect a prescribed advertising effect required for the selling promotion of particular goods. Therefore, the advertiser can rely on the administrator without anxiety to download the advertising information piece to the user.

It is also preferred that the administrator inquires the user of a residential district of the user in cases where the administrator receives the execution declaration of the digital content from the user, and the administrator downloads the digital content, which closely relates to the residential district of the user, to the user.

The advertiser closely related to a particular residential district can download his advertising information piece to the user who resides in the same particular district. Therefore, the advertiser can efficiently and effectively performs his advertisement for the user residing in the district closely related to the advertiser.

It is also preferred that the administrator downloads the digital content, which closely relates to a residential district of the user, and a nationwide digital content to the user in cases where the administrator receives the execution declaration of the digital content from the user.

Because the advertising information piece closely related to the residential district of the user and the nationwide advertising information piece are downloaded to the user, the user can entertain the nationwide advertising information piece and the advertising information piece at high satisfactory.

It is also preferred that the administrator downloads the digital content closely related to a residential district of the user, which is notified by a network operator managing the network, to the user in cases where the administrator receives the execution declaration of the digital content from the user.

It is not required that the user notifies the administrator of the residential district of the user. Therefore, the user can be released from a troublesomeness in which the user notifies the administrator of the residential district. Also, the advertiser can make the user see the advertising information piece closely related to the user without making the user be conscious of his residential district.

The object of the present invention is also achieved by the provision of a digital content billing system using a network, comprising:
an advertiser for possessing an advertising information piece to be provided for a user;
a holder for receiving the advertising information piece from the advertiser, having digital content, which is set to become usable by an execution key, and holding a right to let a third person use the digital content;
a distributor for obtaining the digital content, in which the advertising information piece is included, from the holder and distributing the digital content with the advertising information piece to the user; and
an administrator for obtaining the execution key from the holder, receiving an execution declaration of the digital content from the user, downloading the execution key to the user through the network, and notifying the advertiser of the number of execution times of the digital content used by the user, wherein the holder collects an advertisement rate, which corresponds to the number of execution times of the digital content used by the user, from the advertiser, and the holder pays a download charge, which corresponds to the number of download times of the execution key downloaded from the administrator to the user, to the administrator.

In the above configuration, the distributor distributes the digital content, which includes the advertising information piece and is obtained from the holder, to the user. Also, the administrator receives the execution key from the holder. When the user sends the execution declaration of the digital content to the administrator, the administrator downloads the execution key to the user to permit the user to use the digital content made usable by the execution key. Therefore, the user can enjoy the digital content while seeing the advertising information piece. This procedure is repeatedly performed to make the user use the digital content prescribed times.

Thereafter, the administrator notifies the advertiser of the number of execution times of the digital content used by the user, so that the holder collects an advertisement rate, which corresponds to the number of execution times of the digital content, from the advertiser. Also, the holder pays a download charge, which corresponds to the number of download times of the execution key downloaded from the administrator to the user, to the administrator.

Accordingly, it is not required that the user waits for the downloading of the advertising information piece each time the user uses the digital content. Therefore, a waiting time period from a sending time of the execution declaration to a receiving time of the execution key can be shortened.

The object of the present invention is also achieved by the provision of a digital content billing system using a network, comprising:
a holder for having digital content, which is set to become usable by an execution key, and holding a right to let a third person use the digital content;
an advertiser for possessing an advertising information piece to be provided for a user; and
an administrator and distributor for obtaining the digital content and the execution key from the holder, receiving the advertising information piece from the advertiser, receiving an execution declaration of the digital content from the user, downloading the digital content, the execution key and the advertising information piece to the user through the network in response to the execution declaration, collecting an advertisement rate, which corresponds to the number of execution times of the digital content used by the user, from the advertiser, and paying an execution fee, which corresponds to the number of execution times of the digital content used by the user, to the holder.

In the above configuration, the administrator and distributor obtains the digital content and the execution key from the holder and receives the advertising information piece from the advertiser. When the administrator and distributor receives an execution declaration of the digital content from the user, the administrator and distributor downloads the digital content, the execution key and the advertising information piece to the user through the network. Therefore, the user can enjoy the digital content while seeing the advertising information piece. This procedure is repeatedly performed to make the user use the digital content prescribed times.

Thereafter, the administrator and distributor collects an advertisement rate, which corresponds to the number of execution times of the digital content used by the user, from the advertiser, and the administrator and distributor pays an execution fee, which corresponds to the number of execution times of the digital content used by the user, to the holder.

Accordingly, because the digital content, the execution key and the advertising information piece are simultaneously downloaded to the user, the user can obtain the digital content in simultaneous with the sending of the execution declaration of the digital content.

### BRIEF DESCRIPTION OF THE DRAWINGS

Figure 1 is a diagram showing the configuration of a digital content billing system using a network according to a first embodiment of the present invention:
Figure 2 is a diagram showing the configuration of a terminal possessed by the user 1a;
Figure 3(a) is a diagram showing a preventing method of digital content unrighteous execution in which digital content converted into a digital information ciphering type is distributed;
Figure 3(b) is a diagram showing another preventing method of digital content unrighteous execution in which a guard is arranged in digital content or a terminal;
Figure 4 is a diagram showing an entire processing of the digital content billing system using the network shown in Fig. 1;
Figure 5 is a diagram showing a procedure of a preparation stage in the digital content billing system using the network shown in Fig. 1;
Figure 6 is a diagram showing a procedure of an execution stage of the digital content in the digital content billing system using the network shown in Fig. 1;
Figure 7 is a diagram showing a display example of an advertising information piece and digital content of a game software title downloaded to a user;
Figure 8 is a diagram showing a display example of advertising information and digital content of a cinema downloaded to a user;
Figure 9 is a diagram showing a procedure of an account settlement stage in the digital content billing system using the network shown in Fig. 1;
Figure 10 is a diagram showing an entire processing of the digital content billing system using the network shown in Fig. 1 according to a second embodiment of the present invention;
Figure 11 is a diagram showing a procedure of a preparation stage in the digital content billing system using the network shown in Fig. 1 according to the second embodiment;
Figure 12 is a diagram showing a procedure of an execution stage of digital content in the digital content billing system using the network shown in Fig. 1 according to the second embodiment;
Figure 13 is a diagram showing a procedure of an account settlement stage in the digital content billing system using the network shown in Fig. 1 according to the second embodiment;
Figure 14 is a diagram showing an entire processing of the digital content billing system using the network shown in Fig. 1 according to a third embodiment of the present invention;
Figure 15 is a diagram showing a procedure of a preparation stage in the digital content billing system using the network shown in Fig. 1 according to the third embodiment;
Figure 16 is a diagram showing a procedure of an execution stage of digital content in the digital content billing system using the network shown in Fig. 1 according to the third embodiment;
Figure 17 is a diagram showing a procedure of an account settlement stage in the digital content billing system using the network shown in Fig. 1 according to the third embodiment;
Figure 18 is a diagram showing a procedure of a preparation stage in the digital content billing system using the network shown in Fig. 1 according to a fourth embodiment;
Figure 19 is a diagram showing a procedure of an execution stage of digital content in the digital content billing system using the network shown in Fig. 1 according to the fourth embodiment;
Figure 20 is a diagram showing a procedure of an account settlement stage in the digital content billing system using the network according to the fourth embodiment;
Figure 21 is a diagram showing a procedure of an execution stage of digital content in the digital content billing system using the network shown in Fig. 1 according to a fifth embodiment;
Figure 22 is a diagram showing a procedure of the determination of an advertisement rate in an account settlement stage in the digital content billing system using the network shown in Fig. 1 according to a sixth embodiment;
Figure 23 is a block diagram showing the configuration of a server possessed by an administrator;
Figure 24 is a diagram showing a procedure of the determination of an advertising information piece in an execution stage of digital content in the digital content billing system using the network shown in Fig. 1 according to a seventh embodiment;
Figure 25 is a diagram showing a procedure of the determination of an advertising information piece in an execution stage of digital content in the digital content billing system using the network shown in Fig. 1 according to an eighth embodiment;
Figure 26 is a diagram showing an advertising information genre selection image used for a user to determine a genre of an advertising information piece;
Figure 27 is a block diagram showing the configuration of a server possessed by an administrator according to a ninth embodiment;
Figure 28 is a diagram showing a procedure of the determination of an advertising information piece in an execution stage of digital content in the digital content billing system using the network shown in Fig. 1 according to the ninth embodiment;
Figure 29 is a diagram showing a procedure of the determination of an advertisement rate in an account settlement stage in the digital content billing system using the network shown in Fig. 1 according to a tenth embodiment;
Figure 30 is a diagram showing a contract relationship between an administrator and each advertiser according to an eleventh embodiment;
Figure 31 is a diagram showing a procedure of the determination of an advertising information piece in an execution stage of digital content in the digital content billing system using the network shown in Fig. 1 according to a twelfth embodiment;
Figure 32 is a diagram showing a display example of digital content of a cinema, nationwide advertising information and regional advertising information downloaded to a user;
Figure 33 is a diagram showing the configuration of a digital content billing system using a network according to a fourteenth embodiment of the present invention; and
Figure 34 is a diagram showing the configuration of a digital content billing system using a network according to a fifteenth embodiment of the present invention.

### DETAILED DESCRIPTION OF THE PREFERRED EMBODIMENTS

The invention will now be described with reference to the accompanying drawings.

### EMBODIMENT 1

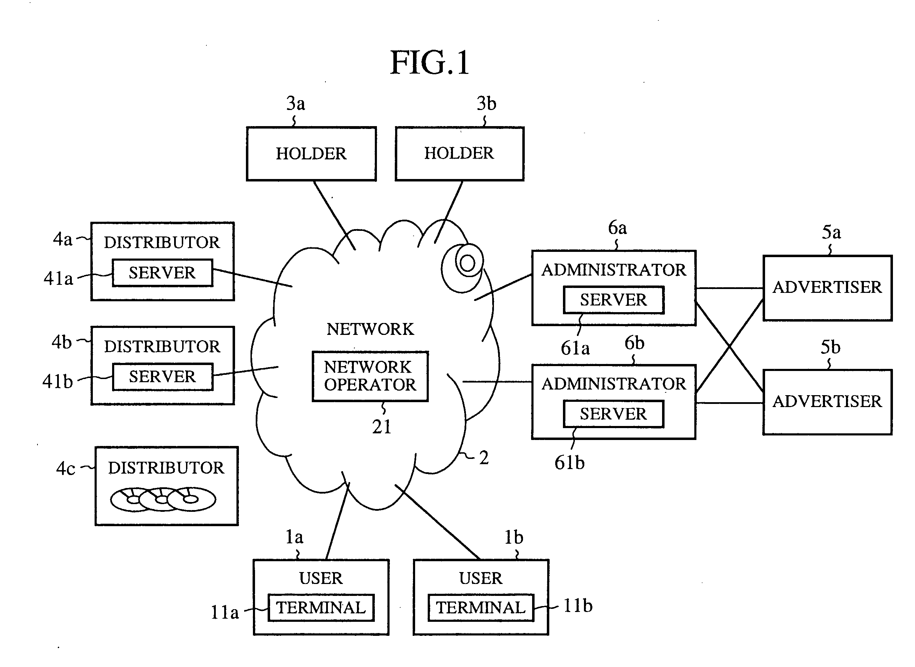

Figure 1 is a diagram showing the configuration of a digital content billing system using a network according to a first embodiment of the present invention.

In Fig. 1, each of reference numerals 1a, 1b indicates a user using digital content, reference numerals 11a and 11b indicate terminals possessed by the users 1a and 1b, a reference numeral 2 indicates a network through which digital content is transmitted, a reference numeral 21 indicates a network operator managing the network 2, reference numerals 3a and 3b indicate holders respectively holding a right to let a third person (or a plurality of third persons) use digital content, reference numerals 4a and 4b indicate distributors for downloading the digital content, which each are set by one holder so as to become usable by using an execution key, to the users 1a and 1b through the network 2, a reference numeral 4c indicates a distributor for distributing the digital content, which is set by one holder so as to become usable by using the execution key, by mail, by supplements of magazines or by hand in the street, and reference numerals 41a and 41b indicate servers possessed by the distributors 4a and 4b.

Also, in Fig. 1, reference numerals 5a and 5b indicate advertisers who possess advertising information pieces to be provided for the users 1a and 1b, reference numerals 6a and 6b indicate administrators who each contract with the holders 3a and 3b and the advertisers 5a and 5b, receive an execution declaration of digital content from each of the users 1a and 1b, download the execution keys received from the holders 3a and 3b and the advertising information pieces of the advertisers 5a and 5b through the network 2, collect an advertisement rate for one advertising information piece, which is determined according to the number of execution times of the corresponding digital content used by the users 1a and 1b, from each of the advertisers 5a and 5b and pay an execution fee for one digital content, which is determined according to the number of execution times of the digital content used by the users 1a and 1b, to each of the holders 3a and 3b, and reference numerals 61a and 61b indicate servers possessed by the administrators 6a and 6b.

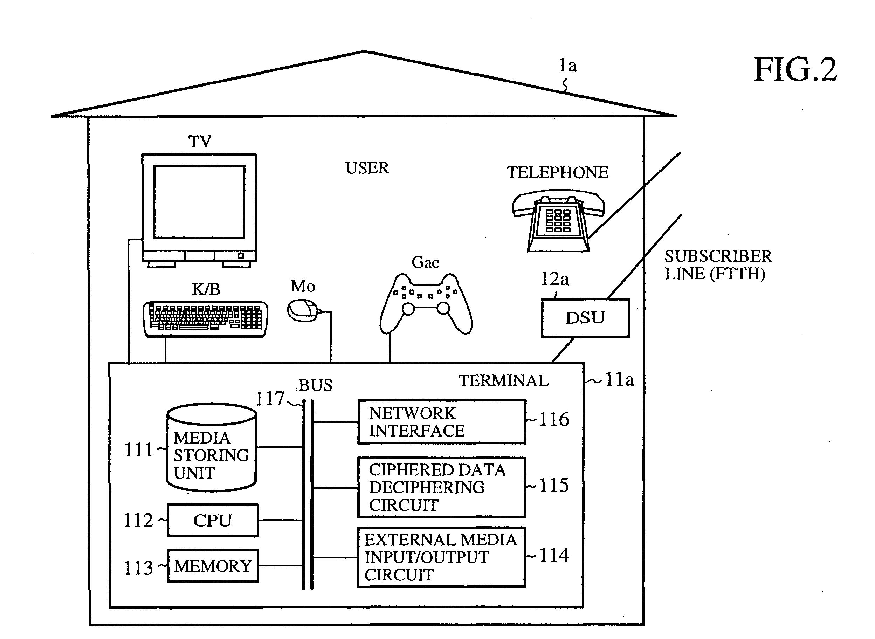

Figure 2 is a diagram showing the configuration of the terminal 11a possessed by the user 1a. The terminal 11a represents the terminals lla and 11b in Fig. 2.

In Fig. 2, a reference numeral 111 indicates a media storing unit, having a large data capacity, for storing digital content downloaded through the network 2. A reference numeral 112 indicates a central processing unit (CPU) for controlling the operation of the terminal 11a, a reference numeral 113 indicates a memory for storing data required to operate the CPU 112, a reference numeral 114 indicates an external media input/output circuit connected to a game controller Gac, a keyboard K/B, a mouse Mo and a home television TV. A reference numeral 115 indicates a ciphered data deciphering circuit for deciphering a ciphered digital content by using an encryption key or the execution key, a reference numeral 116 indicates a network interface, a reference numeral 117 indicates a bus of the terminal 11a, and a reference numeral 12a indicates a digital service unit (DSU) through which the network interface 116 is connected to a two-way subscriber line of a fiber-to-the-home (FTTH) type. The digital service unit (DSU) 12a functions as a terminating unit of a subscriber line.

The terminal 11a with a game control function of the game controller Gac is connected to the keyboard K/B, the mouse Mo and the home television TV functioning as a display to display the digital content. Also, the digital service unit (DSU) 12a is connected to the two-way subscriber line FTTH formed of an optical fiber. In this embodiment, the subscriber line is formed of an optical fiber. However, it is applicable that the subscriber line be formed of a coaxial cable. Also, it is applicable that a telephone line normally used be additionally arranged to make the user la communicate with the administrator 6a or 6b or the distributor 4a or 4b.

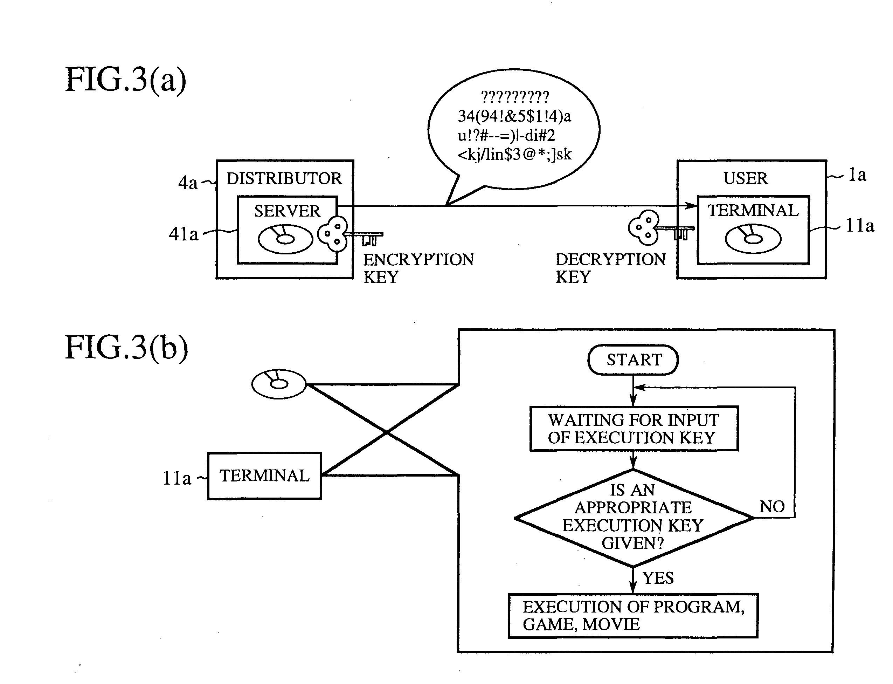

Figure 3(a) is a diagram showing a preventing method of digital content unrighteous execution in which digital content converted into a digital information ciphering type is distributed. In Fig. 3(a), digital content is ciphered in the server 41a of the distributor 4a by using the encryption key and is downloaded to the terminal lla of the user 1a. Thereafter, the ciphered digital content is deciphered in the terminal 11a of the user 1a by using a decryption key, and the deciphered digital content is used by the user 1a.

Figure 3(b) is a diagram showing another preventing method of digital content unrighteous execution in which a guard is arranged in digital content or the terminal 11a. In Fig. 3(b), the user 1a obtains the execution key and deciphers the ciphered digital content by using the execution key. In this embodiment, any of the unrighteous execution preventing methods can be used.

Next, an operation of the digital content billing system using the network 2 is described.

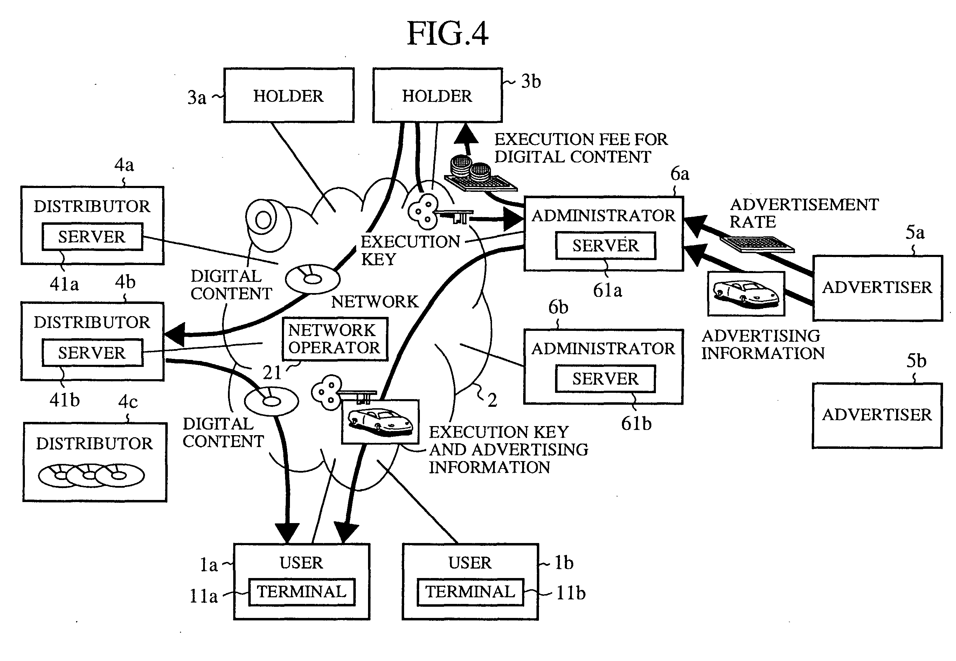

Figure 4 is a diagram showing an entire processing of the digital content billing system using the network 2 according to the first embodiment of the present invention.

The advertiser 5a distributes an advertising information piece to the administrator 6a, and the administrator 6a stores the advertising information piece in the server 61a. The holder 3b sets digital content so as to become usable by using an execution key and downloads the digital content not made usable to the server 41b of the distributor 4b, who is expected to distribute the digital content, through the network 2. Also, the holder 3b downloads the execution key, which is required to use the digital content not made usable, to the server 61a of the administrator 6a through the network 2 . The distributor 4b downloads the digital content downloaded from the holder 3b to the terminal 11a of the user 1a through the network 2.

Thereafter, when the administrator 6a receives an execution declaration of the digital content from the user 1a who desires to use the digital content distributed to the user 1a from the distributor 4b, the administrator 6a attaches the advertising information piece distributed from the advertiser 5a to the execution key downloaded from the holder 3b and downloads the execution key and the advertising information piece to the terminal 11a of the user 1a through the network 2. The downloading of the execution key to the user 1a denotes a permission for the execution declaration. That is, the administrator 6a permits the user 1a to make the digital content usable by using the execution key.

Thereafter, the user 1a makes usable the digital content downloaded from the distributor 4b by using the execution key downloaded from the administrator 6a. In this case, the advertising information piece downloaded from the administrator 6a is automatically inserted in the digital content and is displayed with the digital content on the television TV. The above procedure is performed only once, or the above procedure is repeatedly performed, so that the user 1a uses the digital content provided by the holder 3b only once or many times while seeing the advertising information piece.

Thereafter, because the advertising information piece is always displayed with the digital content, the administrator 6a determines an advertisement rate for the advertising information piece according to the number of execution times of the digital content used by the user 1a, and the administrator 6a collects the advertisement rate from the advertiser 5a. Also, the administrator 6a determines an execution fee for the digital content provided by the holder 3b according to the number of execution times of the digital content used by the user la, and the administrator 6a pays the execution fee to the holder 3b.

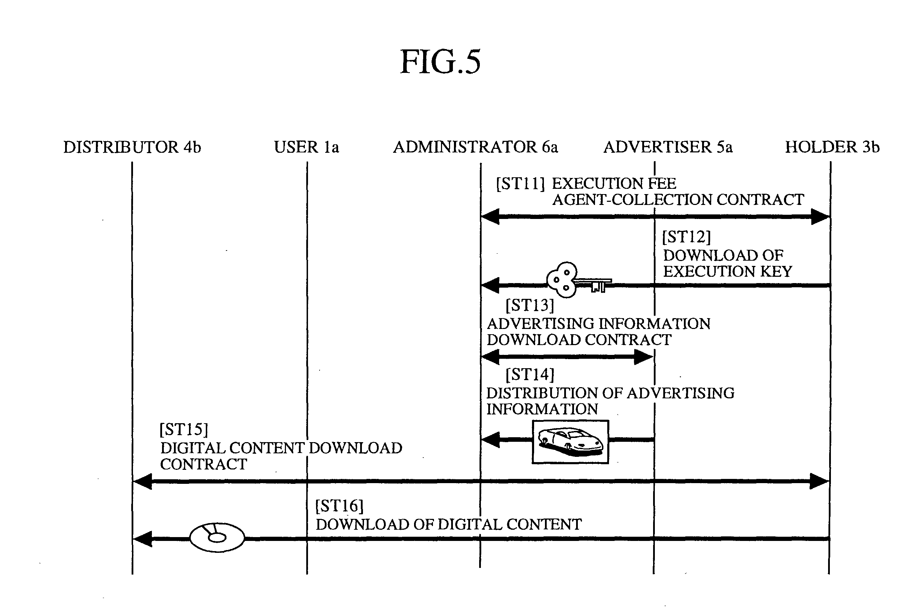

Figure 5 is a diagram showing a procedure of a preparation stage in the digital content billing system using the network 2 according to the first embodiment.

In a step ST11, the administrator 6a makes an agent-collection contract with the holder 3b to let the administrator 6a collect a digital content execution fee. In a step ST12, the holder 3b downloads the execution key of the digital content to the administrator 6a through the network 2 according to the agent-collection contract. In a step ST13, the administrator 6a makes an advertising information download contract with the advertiser 5a for the downloading of the advertising information piece. In a step ST14, the advertiser 5a distributes the advertising information piece to the administrator 6a according to the advertising information download contract.

In a step ST15, the distributor 4b makes digital content download contract with the holder 3b for the downloading of the digital content. In a step ST16, the holder 3b downloads the digital content , which is set to become usable by using the execution key, to the distributor 4b through the network 2 according to the digital content download contract.

A contract making order in the agent-collection contract for the collecting of the execution fee in the step ST11, the advertising information download contract in the step ST13 and the digital content download contract in the step ST15 is not limited to the above order, and any contract can be made at first. Also, it is applicable that the distributor 4b agree with the holder 3b. In this case, the steps ST15 and ST16 are omitted.

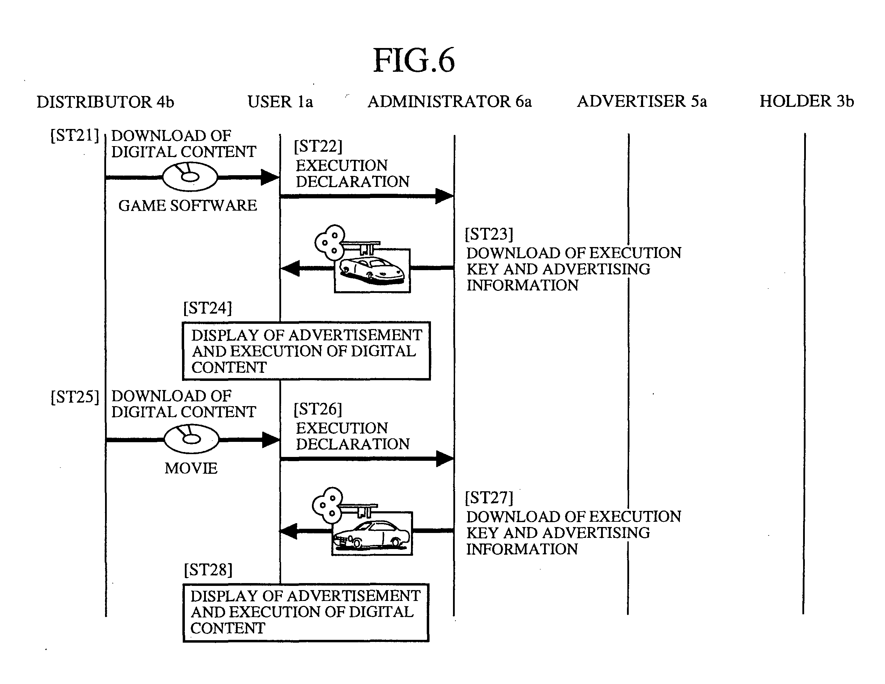

Figure 6 is a diagram showing a procedure of an execution stage of the digital content in the digital content billing system using the network 2 according to the first embodiment.

In a step ST21, the distributor 4b downloads digital content indicating a game software title, which is set to become usable by using the execution key, to the user 1a through the network 2. In a step ST22, the user 1a sends an execution declaration of the digital content to the administrator 6a through the network 2.

In a step ST23, the administrator 6a downloads the execution key received from the holder 3b and the advertising information piece received from the advertiser 5a to the user 1a. In a step ST24, the user 1a uses the digital content made usable by using the execution key downloaded from the administrator 6a while the user 1a sees the advertising information piece downloaded from the administrator 6a. Thereafter, in the same manner as in the steps ST21 to ST24, the user 1a uses digital content of a cinema downloaded from the distributor 4b while the user 1a sees the advertising information piece in steps ST25 to ST28.

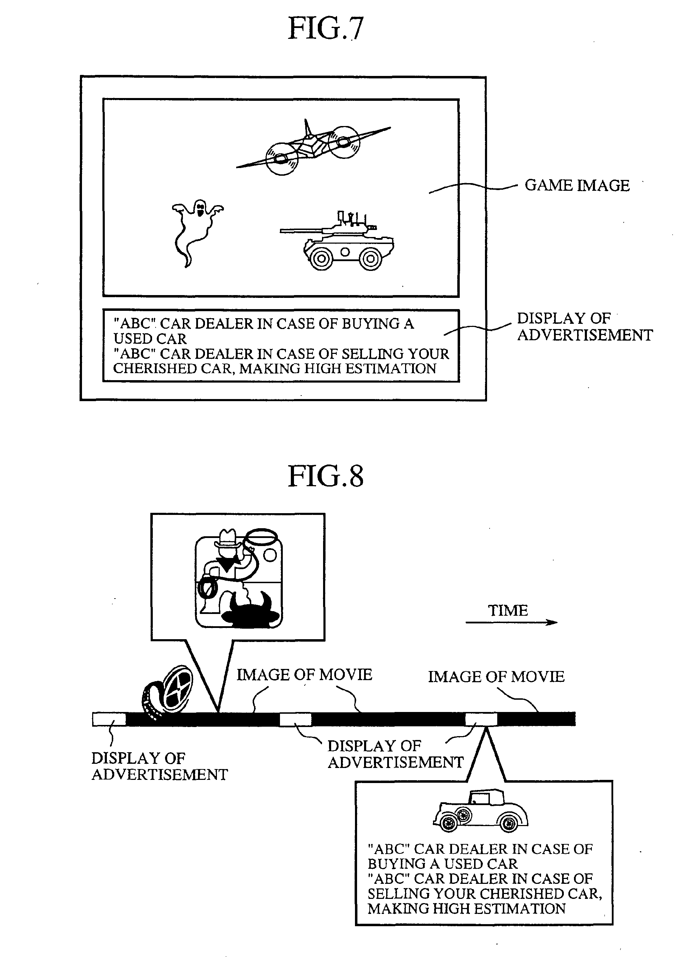

Figure 7 is a diagram showing a display example of the advertising information piece and the digital content of the game software title downloaded to the user 1a. In Fig. 7, the advertising information piece is displayed simultaneously with the game software title.

Figure 8 is a diagram showing a display example of the advertising information piece and the digital content of the movie downloaded to the user 1a. In Fig. 8, the advertising information piece is displayed in each advertising time period between display time periods of images of the movie.

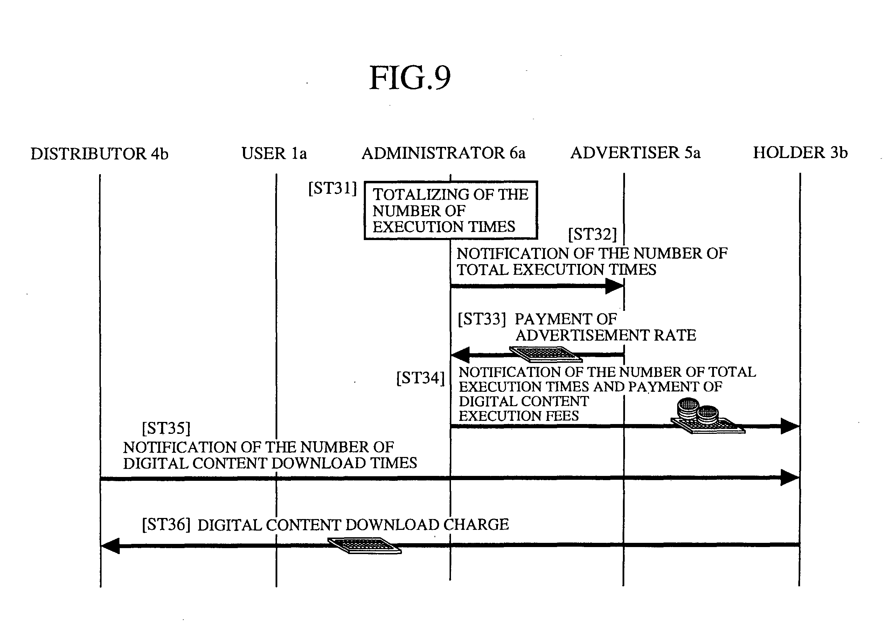

Figure 9 is a diagram showing a procedure of an account settlement stage in the digital content billing system using the network 2 according to the first embodiment.

In a step ST31, the administrator 6a totalizes execution times of the digital content to calculate the number of total execution times of the digital content used by the user 1a. In a step ST32, the administrator 6a notifies the advertiser 5a of the number of total execution times of the digital content in which the advertising information piece is inserted. In a step ST33, the advertiser 5a pays an advertisement rate, which corresponds to the number of total execution times of the digital content, to the administrator 6a. In a step ST34, the administrator 6a notifies the holder 3b of the number of total execution times of the digital content and pays a digital content execution fee, which corresponds to the number of total execution times of the digital content, to the holder 3b.

In a step ST35, the distributor 4b calculates the number of download times of the digital content downloaded from the distributor 4b and notifies the holder 3b of the number of download times of the digital content. In a step ST36, the holder 3b pays a digital content download charge, which corresponds to the number of download times of the digital content, to the distributor 4b.

In this embodiment, the digital content download charge depends on the number of download times of the digital content according to a charge contract of the distributor 4b with the holder 3b for the downloading of the digital content. However, the present invention is not limited to this charge contract. For example, it is applicable that the digital content download charge depend on digital content downloading possible time period. In this case, the notification of the number of download times of the digital content from the distributor 4b to the holder 3b in the step ST35 is not necessary.

Also, in this embodiment, the administrator 6a makes the advertising information download contract with the advertiser 5a and inserts the advertising information piece in the digital content. However, the present invention is not limited to this advertising information download contract. For example, it is applicable that the distributor 4b directly make an advertising information download contract with the advertiser 5b for the downloading of an advertising information piece. In this case, for example, the distributor 4b inserts the advertising information piece received from the advertiser 5b in an image of a digital content menu, which is produced by the distributor 4b and is watched by the user 1a to select a desired file of digital content from a plurality of files of digital content, to make the user la see the advertising information piece on the television TV, and the distributor 4b collects an advertisement rate for the advertising information piece from the advertiser 5b. Therefore, the step ST36 is not required.

Also, it is applicable that the distributor 4b agree with the holder 3b. In this case, the steps ST35 and ST36 can be omitted.

Also, in this embodiment, the distributor 4b receives the digital content, which is set to become usable by using the execution key, from the holder 3b, the distributor 4b downloads the digital content to the user 1a, the user 1a receives the execution key and the advertising information piece from the administrator 6a, and the user 1a uses the digital content. However, it is applicable that the distributor 4b, who receives digital content usable without the execution key from the holder 3b, downloads the digital content to the well-intentioned user 1a to let the user 1a use the digital content on condition that the user 1a receives the advertising information piece from the administrator 6a.

Also, in this embodiment, the holders 3a and 3b, who each hold a right to let a third person (or a plurality of third persons) use digital content of the holder, respectively makes a contract with each of the administrators 6a, 6b and the distributors 4a and 4b and downloads the digital content and its execution key. However, because a creator creating the digital content holds the right to let a third person use the digital content, it is applicable that the creator be make a contract with each of the administrators 6a, 6b and the distributors 4a and 4b and download the digital content and its execution key. In this case, the creator is included in each of the holders 3a and 3b.

Each holder holding a right to let a third person (or a plurality of third persons) use digital content of the holder is defined as follows.

In cases where the right for digital content is transferred from a creator creating the digital content to a person, the person becomes a holder. Also, in cases where a person is authorized by a creator creating digital content to let a third person use the digital content, the person becomes a holder. For example, the holder denotes an agent of a creator. Also, in cases where a creator creates digital content (for example, software), a person who obtains a permission from the creator to distribute a digital content execution right to a third person is the holder. Also, in cases where a creator creates digital content (for example, a music file, video file or a game software title), a person who obtains a permission from the creator to distribute a digital content playback right to a third person is the holder. Also, a person who obtains a permission from a creator to distribute digital content created by the creator to a third person is the holder. Also, there is a case that the holder denotes a second holder authorized by a first holder who is authorized by a creator.

Accordingly, in the first embodiment, the user can enjoy a desired digital content without charge by seeing the downloaded advertising information piece.

Also, in the first embodiment, because any user can use digital content without charge, the digital content provided by the holder 3b can be easily seen by many users, so that the holder 3b can obtain an execution fee corresponding to the number of execution times of the digital content.

Also, in the first embodiment, in cases where digital content downloaded from the distributor 4b to the user 1a is copied by the user 1a to use the copied digital content, it is required that the user 1a notifies the administrator 6a of the use of the digital content, so that the administrator 6a can know the number of execution times of the digital content copied and used by the user 1a. Therefore, even though digital content downloaded to the user 1a is copied by the user 1a, the holder 3b can reliably obtain an execution fee for the copied digital content.

Also, in the first embodiment, because the administrator 6a permits the user 1a to use digital content when the administrator 6a receives an execution declaration expressing the use of the digital content from the user 1a, the administrator 6a can reliably grasp the number of execution times of the digital content used by the user 1a.

Also, in the first embodiment, it is not required that the administrator 6a collects an execution fee for digital content from the user 1a who uses the digital content. Therefore, even though a large number of users use the digital content, the administrator 6a can be released from a troublesome work in which the administrator 6a collects the execution fee from each of the users.

Also, in the first embodiment, the advertiser 5a can efficiently make the user 1a see the advertising information piece by only paying the advertisement rate to the administrator 6a.

### EMBODIMENT 2

The configuration of a digital content billing system using a network according to a second embodiment is the same as that shown in Fig. 1 of the first embodiment.

In the second embodiment, an advertising information piece possessed by the advertiser 5a has been already inserted in each digital content which is planned to be downloaded from the holder 3b to the distributor 4b.

An operation of the digital content billing system using the network according to the second embodiment is described.

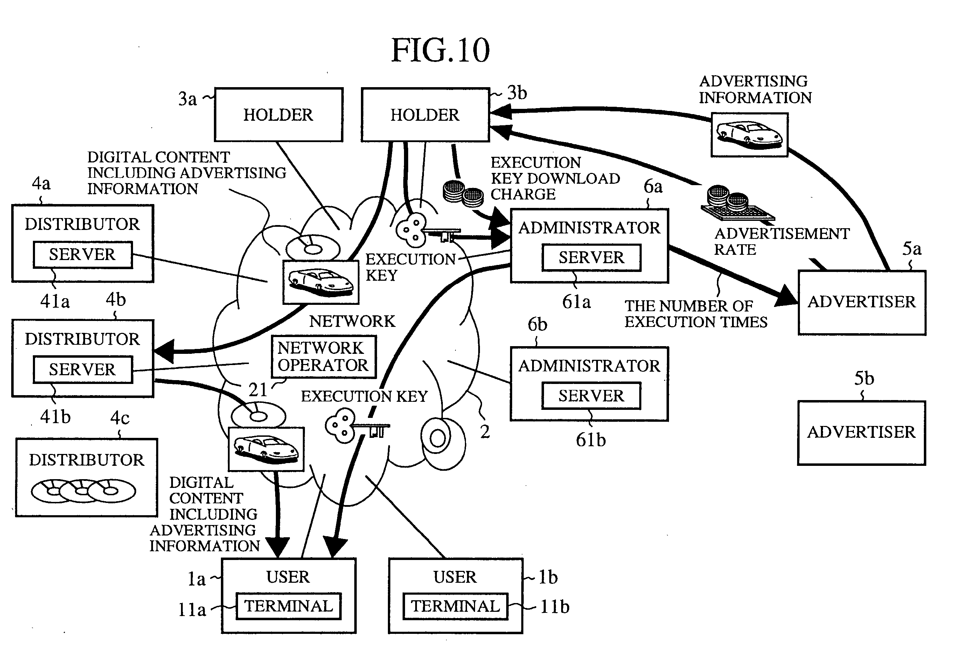

Figure 10 is a diagram showing an entire processing of the digital content billing system using the network shown in Fig. 1 according to the second embodiment of the present invention.

The advertiser 5a distributes an advertising information piece to the holder 3b. The holder 3b sets digital content so as to become usable by using an execution key, and the holder 3b downloads the digital content not made usable, in which the advertising information piece is inserted, to the server 41a of the distributor 4 through the network 2. Also, the holder 3b downloads the execution key, which is required to make usable the digital content, to the server 61a of the administrator 6a through the network 2. The distributor 4b downloads the digital content, which is downloaded from the holder 3b and includes the advertising information piece, to the terminal lla of the user 1a through the network 2.

Thereafter, when the administrator 6a receives an execution declaration from the user 1a who desires to use the digital content distributed to the user 1a, the administrator 6a downloads the execution key downloaded from the holder 3b to the terminal 11a of the user 1a through the network 2. The user 1a makes usable the digital content, which is downloaded from the distributor 4b and includes the advertising information piece, by using the execution key downloaded from the administrator 6a, and the user 1a uses the digital content while the user 1a sees the advertising information piece. In this case, the advertising information piece is displayed with the digital content on the television TV. The above procedure is performed only once, or the above procedure is repeatedly performed, so that the user 1a sees the digital content provided by the holder 3b only once or many times while seeing the advertising information piece.

Thereafter, the administrator 6a notifies the advertiser 5a of the number of execution times of the digital content used by the user 1a, the advertiser 5a pays an advertisement rate, which corresponds to the number of execution times of the digital content used by the user 1a, to the holder 3b. The holder 3b pays an execution key download charge, which corresponds to the number of download times of the execution key downloaded to the user 1a, to the administrator 6a.

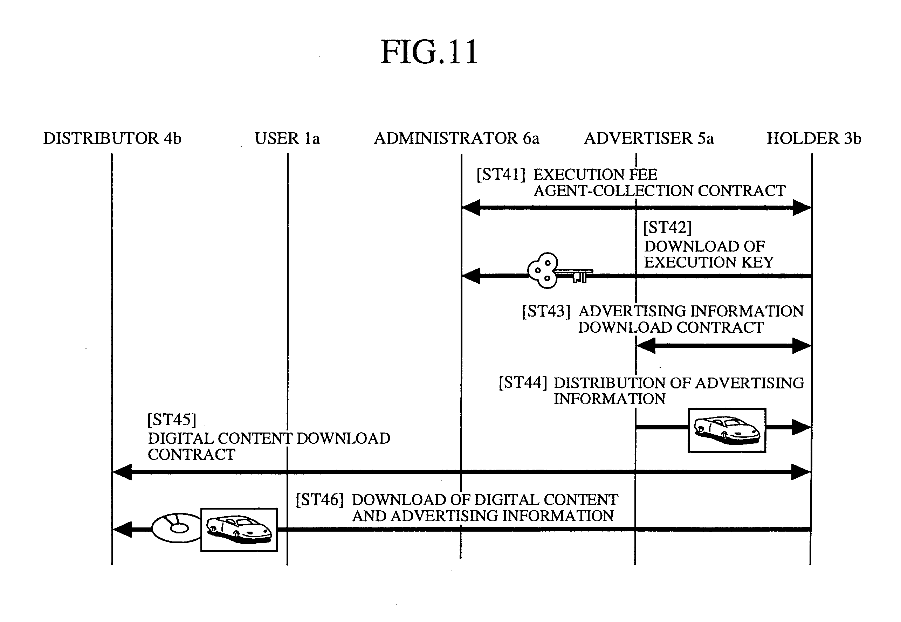

Figure 11 is a diagram showing a procedure of a preparation stage in the digital content billing system using the network 2 according to the second embodiment.

In a step ST41, the administrator 6a makes an agent-collection contract with the holder 3b to let the administrator 6a collect a digital content execution fee. In a step ST42, the holder 3b downloads the execution key of the digital content to the administrator 6a through the network 2 according to the agent-collection contract. In a step ST43, the holder 3b makes an advertising information download contract with the advertiser 5a for the downloading of the advertising information piece. In a step ST44, the advertiser 5a distributes the advertising information piece to the holder 3b according to the advertising information download contract.

In a step ST45, the distributor 4b makes a digital content download contract with the holder 3b for the downloading of the digital content. In a step ST46, the holder 3b downloads the digital content, which is set to become usable by using the execution key and includes the advertising information, to the distributor 4b through the network 2 according to the digital content download contract.

A contract making order in the agent-collection contract for the collecting of the execution fee in the step ST41, the advertising information download contract in the step ST43 and the digital content download contract in the step ST45 is not limited to the above order, and any contract can be made at first. Also, it is applicable that the distributor 4b agree with the holder 3b. In this case, the steps ST 45 and ST46 are omitted.

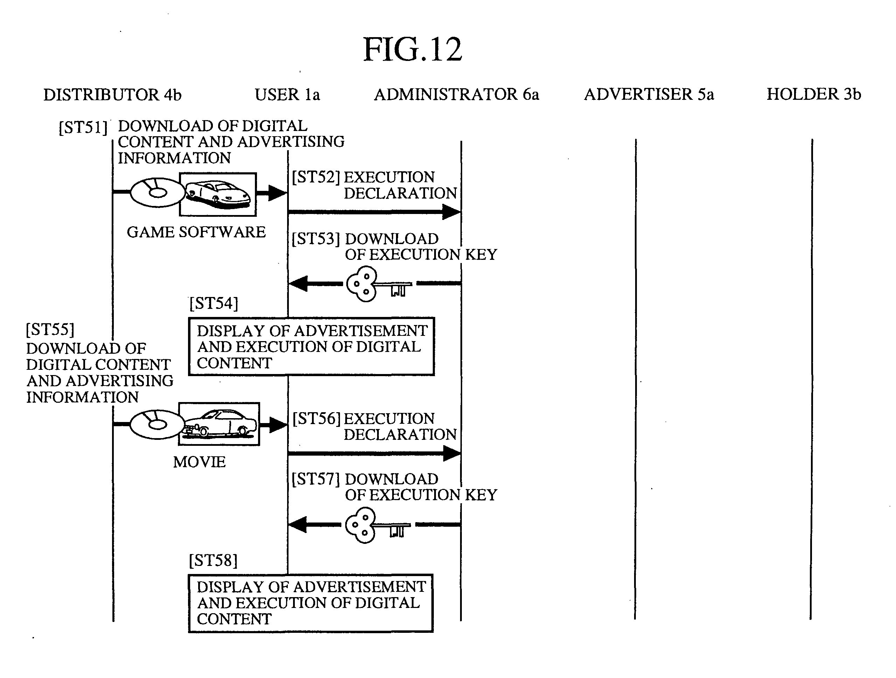

Figure 12 is a diagram showing a procedure of an execution stage of the digital content in the digital content billing system using the network 2 according to the second embodiment.

In a step ST51, the distributor 4b downloads digital content indicating a game software title, which is set to become usable by using the execution key and includes the advertising information, to the user 1a through the network 2. In a step ST52, the user 1a sends an execution declaration expressing the use of the digital content to the administrator 6a through the network 2.

In a step ST53, the administrator 6a downloads the execution key received from the holder 3b to the user 1a. In a step ST54, the user 1a uses the digital content by using the execution key downloaded from the administrator 6a while the user 1a sees the advertising information piece inserted in the digital content. Thereafter, in the same manner as in the steps ST51 to ST54, the user 1a uses digital content of a cinema downloaded from the distributor 4b while the user 1a sees the advertising information piece in steps ST55 to ST58.

A method for displaying, in the step ST54, both the digital content of the game software title and the advertising information piece downloaded from the distributor 4b is the same as that shown in Fig. 7, and the advertising information piece is displayed with an image of the game software title. Also, a method for displaying, in the step ST58, both the digital content of the movie and the advertising information piece downloaded from the distributor 4b are the same as that shown in Fig. 8, and the advertising information piece is displayed in each advertising time period between display time periods of images of the movie.

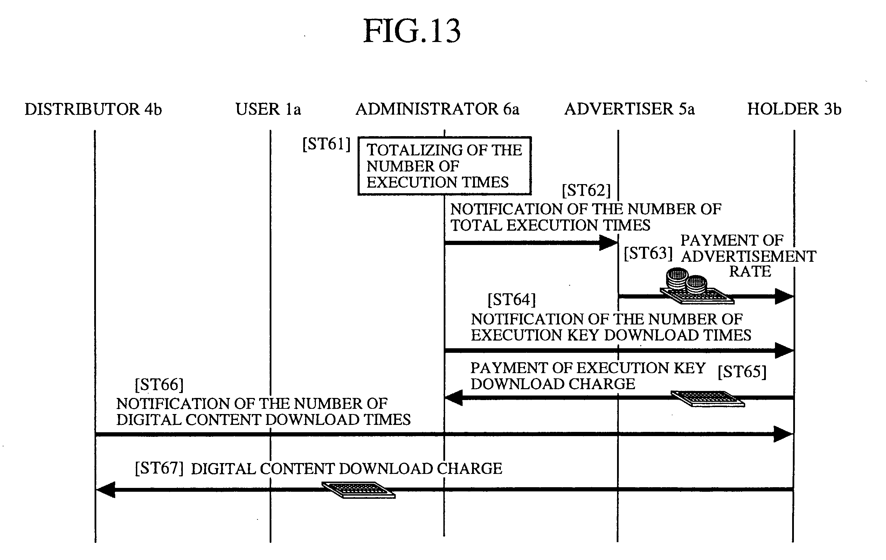

Figure 13 is a diagram showing a procedure of an account settlement stage in the digital content billing system using the network 2 according to the second embodiment.

In a step ST61, the administrator 6a totalizes execution times of the digital content to calculate the number of total execution times of the digital content used by the user 1a. In a step ST62, the administrator 6a notifies the advertiser 5a of the number of total execution times of the digital content in which the advertising information piece is inserted. In a step ST63, the advertiser 5a pays an advertisement rate, which corresponds to the number of total execution times of the digital content, to the holder 3b. In a step ST64, the administrator 6a notifies the holder 3b of the number of total download times of the execution key downloaded from the administrator 6a. In a step ST65, the holder 3b pays an execution key download charge, which corresponds to the number of total download times of the execution key, to the administrator 6a.

In a step ST66, the distributor 4b calculates the number of download times of the digital content downloaded from the distributor 4b and notifies the holder 3b of the number of download times of the digital content. In a step ST67, the holder 3b pays a digital content download charge, which corresponds to the number of download times of the digital content downloaded from the distributor 4b, to the distributor 4b.

In this embodiment, the digital content download charge depends on the number of download times of the digital content according to a charge contract of the distributor 4b with the holder 3b for the downloading of the digital content. However, the present invention is not limited to this charge contract. For example, it is applicable that the digital content download charge depend on a digital content downloading possible time period. In this case, the notification of the number of download times of the digital content from the distributor 4b to the holder 3b in the step ST66 is not necessary.

Also, in this embodiment, the holder 3b makes the advertising information download contract with the advertiser 5a and inserts the advertising information piece in the digital content. However, the present invention is not limited to this advertising information download contract. For example, it is applicable that the distributor 4b directly make an advertising information download contract with the advertiser 5b for the downloading of an advertising information piece. In this case, for example, the distributor 4b inserts the advertising information piece received from the advertiser 5b in an image of a digital content menu, which is watched by the user 1a to select a desired file of digital content from a plurality of files of digital content, to make the user 1a see the advertising information piece on the television TV, and the distributor 4b collects an advertisement rate for the advertising information piece from the advertiser 5b. Therefore, the step ST67 is not required.

Also, it is applicable that the distributor 4b agree with the holder 3b. In this case, the steps ST66 and ST67 can be omitted.

Accordingly, in the second embodiment, the user can enjoy a desired digital content without charge by seeing the downloaded advertising information piece.

Also, in the second embodiment, because the advertising information has been already inserted in the digital content by the holder 3b when the user 1a receives the digital content from the distributor 4b, the downloading of the advertising information piece performed each time the user 1a uses the digital content is not required. Therefore, a waiting time period from a sending time of the execution declaration to a receiving time of the execution key can be shortened.

Also, in the second embodiment, because the user can enjoy digital content without charge, the digital content provided by the holder 3b can be easily used by many users, so that the holder 3b can obtain an advertisement rate corresponding to the number of execution times of the digital content used by the user 1a while seeing the advertising information piece.

Also, in the second embodiment, even though the digital content downloaded from the distributor 4b is copied by the user 1a to use the copied digital content, it is required that the user 1a notifies the administrator 6a of the use of the digital content, so that the administrator 6a can know the number of execution times of the digital content copied and used by the user 1a. Therefore, even though digital content downloaded to a user is copied by the user, the holder 3b can reliably obtain an execution fee for the copied digital content.

Also, in the second embodiment, because the administrator 6a permits the user 1a to use digital content when the administrator 6a receives an execution declaration of the digital content from the user 1a, the administrator 6a can reliably grasp the number of execution times of the digital content.

Also, in the second embodiment, it is not required that the administrator 6a collects an execution fee for digital content from the user 1a who uses the digital content. Therefore, even though a large number of users use the digital content, the administrator 6a can be released from a troublesome work in which the execution fee is collected from each of the users.

Also, in the second embodiment, the advertiser 5a can efficiently make the user 1a see the advertising information piece by only paying the advertisement rate to the holder 3b.

### EMBODIMENT 3

The configuration of a digital content billing system using a network according to a third embodiment is the same as that shown in Fig. 1 of the first embodiment.

In the third embodiment, the administrator 6a does not download a set of one execution key and one advertising information piece each time the administrator 6a receives the execution declaration from the user 1a, but the administrator 6a downloads a plurality of advertising information pieces and an execution key, which is required to let a user use digital content prescribed times, in cases where the administrator 6a receives the execution declaration expressing the use of the digital content from the user 1a.

An operation of the digital content billing system using the network according to the third embodiment is described.

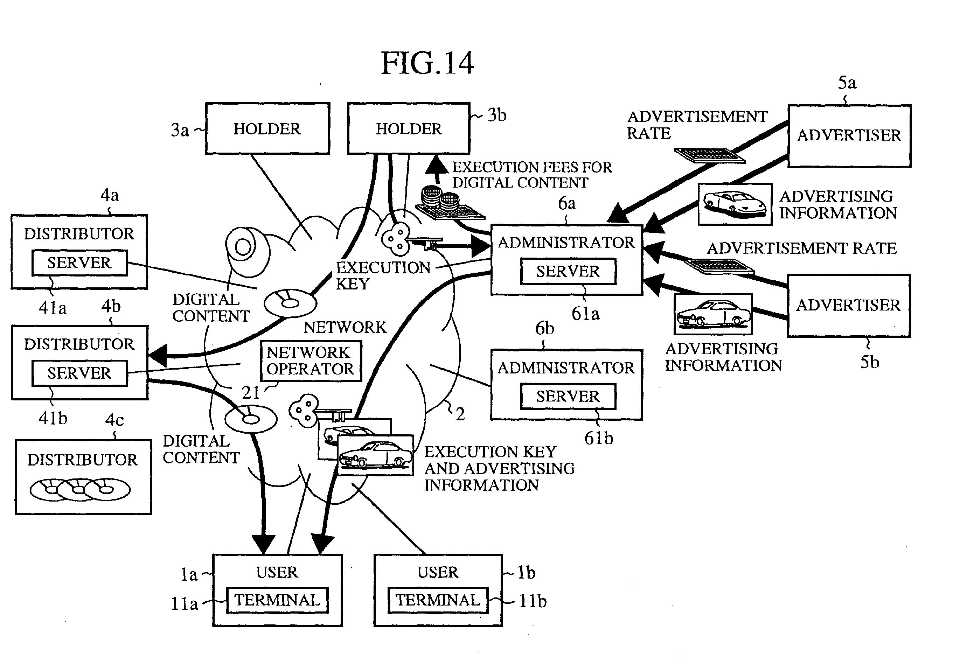

Figure 14 is a diagram showing an entire processing of the digital content billing system using the network shown in Fig. 1 according to the third embodiment of the present invention.

Each of the advertisers 5a and 5b distributes an advertising information piece to the administrator 6a, and the administrator 6a stores the advertising information pieces in the server 61a. The holder 3b sets digital content so as to become usable by using an execution key and downloads the digital content to the server 41a of the distributor 4 through the network 2. Also, the holder 3b downloads the execution key, which is required to make usable the digital content, to the server 61a of the administrator 6a through the network 2. The distributor 4b downloads the digital content downloaded from the holder 3b to the terminal 11a of the user 1a through the network 2.

Thereafter, when the administrator 6a receives an execution declaration from the user 1a who desires to use twice the digital content distributed from the distributor 4b, the administrator 6a attaches the advertising information pieces distributed from the advertisers 5a and 5b to the execution key downloaded from the holder 3b so as to let the user use the digital content twice. Thereafter, the administrator 6a downloads the execution key and the advertising information pieces to the terminal 11a of the user 1a through the network 2. The user 1a uses the digital content downloaded from the distributor 4b by using the execution key downloaded from the administrator 6a. In this case, the advertising information piece downloaded from the administrator 6a is automatically displayed with the digital content on the television TV.

Thereafter, when the user 1a again uses the digital content downloaded from the distributor 4b by using the execution key downloaded from the administrator 6a, the advertising information piece downloaded from the administrator 6b is automatically displayed with the digital content on the television TV. Therefore, the user 1a uses the digital content while seeing the advertising information piece downloaded from the administrator 6b.

Thereafter, the administrator 6a determines an advertisement rate for each advertising information piece according to the number of execution times of the digital content, which is used by the user 1a while the user 1a sees the advertising information piece, the administrator 6a collects the advertisement rate for the advertising information piece, which is downloaded from the advertiser 5a, from the advertiser 5a, and the administrator 6a collects the advertisement rate for the advertising information piece, which is downloaded from the advertiser 5b, from the advertiser 5b. Also, the administrator 6a determines an execution fee for the digital content according to the number of execution times of the digital content used by the user 1a, and the administrator 6a pays the execution fee to the holder 3b.

In the example of Fig. 14, the administrator 6a receives the advertising information piece distributed from each of the advertisers 5a and 5b, the administrator 6a permits that the user 1a uses the digital content at first while seeing the advertising information piece of the advertiser 5a, and the administrator 6a permits that the user 1a uses the digital content at the second place while seeing the advertising information piece of the advertiser 5b. However, it is applicable that the administrator 6a permit that the user 1a uses the digital content prescribed times while seeing the same advertising information piece of the advertiser 5a (or the advertiser 5b). In this case, the user 1a receives only the advertising information piece of the advertiser 5a (or the advertiser 5b).

A method for permitting the user 1a to use the digital content prescribed times is described.

For example, the administrator 6a writes a piece of plural-execution permission information in the execution key. Therefore, the user 1a can make usable the digital content prescribed times by using the execution key prescribed times. Also, it is applicable that a piece of plural-execution permission information be additionally attached to the set of the advertising information pieces and the execution key downloaded to the user 1a. Also, it is applicable that the user 1a have a program in advance in the server 11a to let the user 1a use the digital content prescribed times corresponding to the number of advertising information pieces downloaded to the user 1a. Also, it is applicable that a plurality of execution keys be downloaded with a plurality of advertising information pieces (or one advertising information piece) to the user la to let the user 1a use the digital content prescribed times corresponding to the number of execution keys.

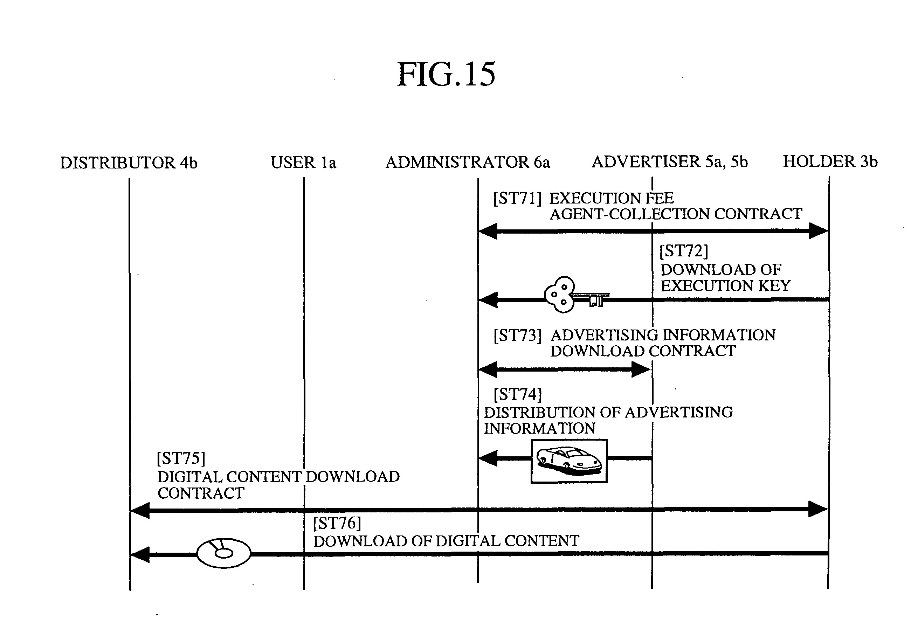

Figure 15 is a diagram showing a procedure of a preparation stage in the digital content billing system using the network 2 according to the third embodiment.

In a step ST71, the administrator 6a makes an agent-collection contract with the holder 3b to let the administrator 6a collect a digital content execution fee. In a step ST72, the holder 3b downloads the execution key, which is required to make usable digital content of the holder 3b, to the administrator 6a through the network 2 according to the agent-collection contract. In a step ST73, the administrator 6a makes an advertising information download contract with each of the advertisers 5a and 5b for the downloading of the advertising information pieces of the advertisers 5a and 5b. In a step ST74, each of the advertisers 5a and 5b distributes his advertising information piece to the administrator 6a according to the advertising information download contract.

In a step ST75, the distributor 4b makes a digital content download contract with the holder 3b for the downloading of the digital content. In a step ST76, the holder 3b downloads the digital content, which is set to become usable by using the execution key, to the distributor 4b through the network 2 according to the digital content download contract.

A contract making order in the agent-collection contract for the collecting of the execution fee in the step ST71, the advertising information download contract in the step ST73 and the digital content download contract in the step ST75 is not limited to the above order, and any contract can be made at first. Also, it is applicable that the distributor 4b agree with the holder 3b. In this case, the steps ST 75 and ST76 are omitted.

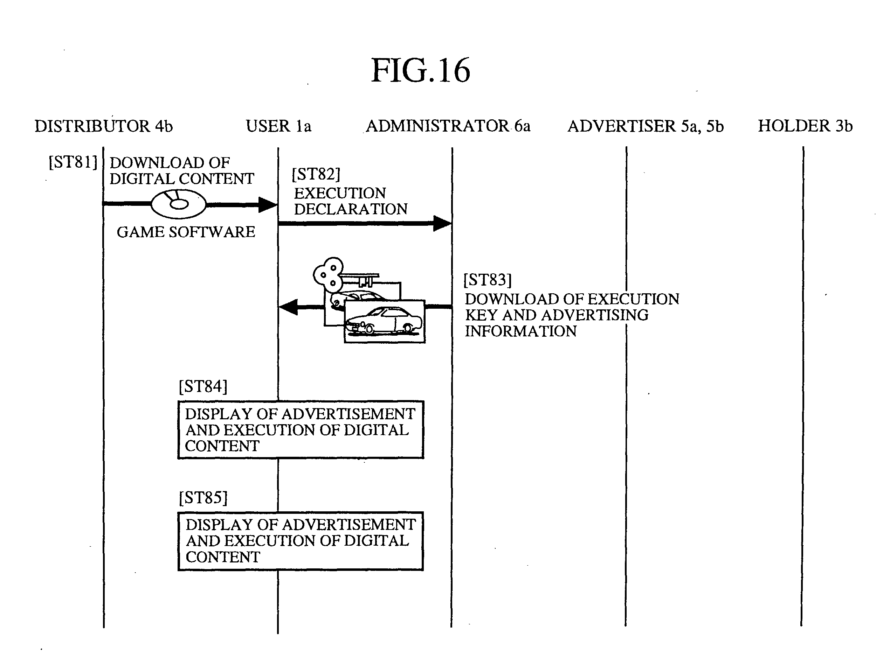

Figure 16 is a diagram showing a procedure of an execution stage of the digital content in the digital content billing system using the network 2 according to the third embodiment.

In a step ST81, the distributor 4b downloads digital content indicating a game software title, which is set to become usable by using the execution key, to the user 1a through the network 2. In a step ST82, the user 1a sends an execution declaration, which expresses that the user 1a desires to use the digital content prescribed times, to the administrator 6a through the network 2.

In a step ST83, the administrator 6a downloads the advertising information pieces received from the advertisers 5a and 5b and the execution key to the user la so as to permit the user 1a to use the digital content prescribed times. In a step ST84, the user 1a uses the digital content, which is made usable by using the execution key downloaded from the administrator 6a, while the user 1a sees the advertising information piece downloaded from the administrator 6a. Thereafter, in a step ST85, the user 1a again uses the digital content, which is made usable by using the execution key downloaded from the administrator 6a, while the user 1a sees the advertising information piece downloaded from the administrator 6b.

In the steps ST84 and ST85, a method for displaying both the game software title and the advertising information piece downloaded from each distributor is the same as that shown in Fig. 7, and the advertising information piece is displayed with an image of the game software title.

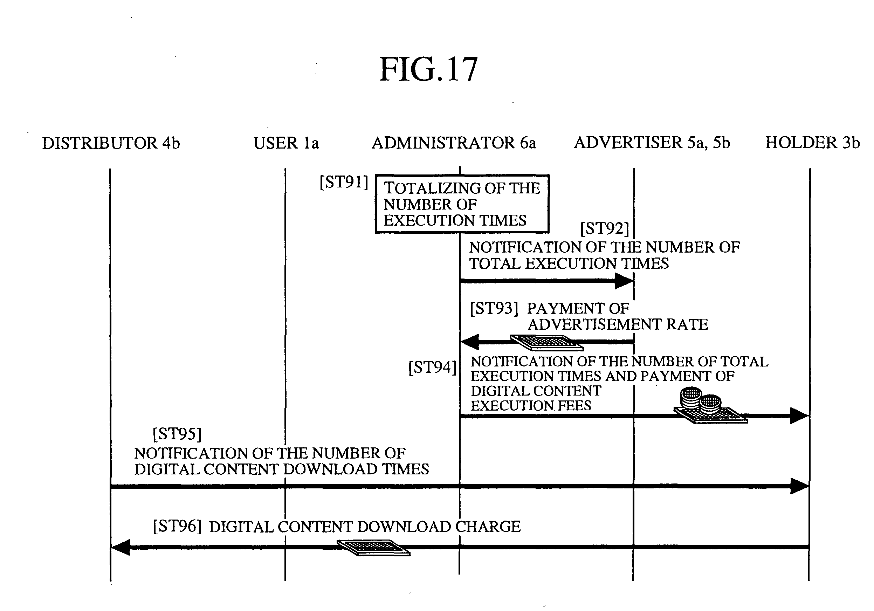

Figure 17 is a diagram showing a procedure of an account settlement stage in the digital content billing system using the network 2 according to the third embodiment.

In a step ST91, the administrator 6a totalizes execution times of the digital content used by the user 1a. That is, the administrator 6a calculates the number of first total execution times of the digital content used by the user la while the user 1a sees the advertising information piece downloaded from the advertiser 5a. Also, the administrator 6a calculates the number of second total execution times of the digital content used by the user 1a while the user 1a sees the advertising information piece downloaded from the advertiser 5b. In a step ST92, the administrator 6a notifies the advertiser 5a of the number of first total execution times of the digital content, and the administrator 6a notifies the advertiser 5b of the number of second total execution times of the digital content. In a step ST93, the advertiser 5a pays an advertisement rate, which corresponds to the number of first total execution times of the digital content, to the administrator 6a, and the advertiser 5b pays an advertisement rate, which corresponds to the number of second total execution times of the digital content, to the administrator 6a. In a step ST94, the administrator 6a notifies the holder 3b of the number of total execution times of the digital content used by the user 1a, and the administrator 6a pays a digital content execution fee, which corresponds to the number of total execution times of the digital content, to the holder 3b.

In a step ST95, the distributor 4b notifies the holder 3b of the number of download times of the digital content downloaded from the distributor 4b. In a step ST96, the holder 3b pays a digital content download charge, which corresponds to the number of download times of the digital content, to the distributor 4b.

In this embodiment, the digital content download charge depends on the number of download times of the digital content according to a charge contract of the distributor 4b with the holder 3b for the downloading of the digital content. However, the present invention is not limited to this charge contract. For example, it is applicable that the digital content download charge depend on a digital content downloading possible time period. In this case, the notification of the number of download times of the digital content from the distributor 4b to the holder 3b in the step ST95 is not necessary.

Also, in this embodiment, the administrator 6a makes the advertising information download contract with the advertisers 5a and 5b and inserts each of the advertising information pieces of the advertisers 5a and 5b in the digital content. However, the present invention is not limited to this advertising information download contract. For example, it is applicable that the distributor 4b make an advertising information download contract with each of the advertisers 5a and 5b for the downloading of an advertising information piece. In this case, for example, the distributor 4b inserts the advertising information piece received from each of the advertisers 5a and 5b in an image of a digital content menu, which is watched by the user 1a to select a desired file of digital content from a plurality of files of digital content, to make the user 1a see the advertising information piece of each of the advertisers 5a and 5b on the television TV, and the distributor 4b collects an advertisement rate for the advertising information piece from each of the advertisers 5a and 5b. Therefore, the step ST96 is not required.

Also, it is applicable that the distributor 4b agree with the holder 3b. In this case, the steps ST 95 and ST96 are omitted.

Accordingly, in the third embodiment, because it is not required that the user 1a sends the execution declaration to the administrator 6a each time the user 1a uses the digital content, the user 1a can reduce a troublesomeness of the sending of the execution declaration, and a waiting time period from the sending of the execution declaration to the receiving of the execution key can be shortened.

Also, in the third embodiment, the user 1a can use a desired digital content many times without charge by seeing the downloaded advertising information pieces.

Also, in the third embodiment, because any user can use digital content without charge, the digital content provided by the holder 3b can be easily seen by many users, so that the holder 3b can obtain an execution fee corresponding to the number of execution times of the digital content used by the users.

Also, in the third embodiment, in cases where digital content downloaded from the distributor 4b to the user 1a is copied by the user 1a to use the copied digital content, it is required that the user 1a notifies the administrator 6a of the use of the digital content, so that the administrator 6a can know the number of execution times of the digital content copied and used by the user 1a. Therefore, even though digital content downloaded to a user is copied by the user, the holder 3b can reliably obtain an execution fee for the copied digital content.

Also, in the third embodiment, because the administrator 6a permits the user 1a to use digital content prescribed times only when the administrator 6a receives an execution declaration expressing the use of the digital content from the user 1a, the administrator 6a can reliably grasp the number of execution times of the digital content used by the user 1a.

Also, in the third embodiment, it is not required that the administrator 6a collects an execution fee for digital content from the user 1a who uses the digital content. Therefore, even though a large number of users use the digital content, the administrator 6a can be released from a troublesome work in which the execution fee is collected from each of the users.

Also, in the third embodiment, each of the advertisers 5a and 5b can efficiently make the user 1a see the advertising information piece by only paying the advertisement rate to the administrator 6a.

### EMBODIMENT 4

The configuration of a digital content billing system using a network according to a fourth embodiment is the same as that shown in Fig. 1 of the first embodiment.

In cases where the network 2 is not operated, the user 1a cannot send an execution declaration to the administrator 6a through the network 2, so that the user la cannot receive an execution key from the administrator 6a. Also, in cases where the server 6a of the administrator 6a is in a down condition, even though the user 1a sends an execution declaration to the administrator 6a through the network 2, the user 1a cannot receive an execution key from the administrator 6a.

In the fourth embodiment, in cases where the user 1a cannot receive an execution key, which is required to make digital content usable, from the administrator 6a, the user 1a uses the digital content, which is made usable by using an execution key received from the administrator 6a in the past, by displaying an advertising information piece received with the execution key in the past from the administrator 6a on the television TV.

An operation of the digital content billing system using the network according to the fourth embodiment is described.

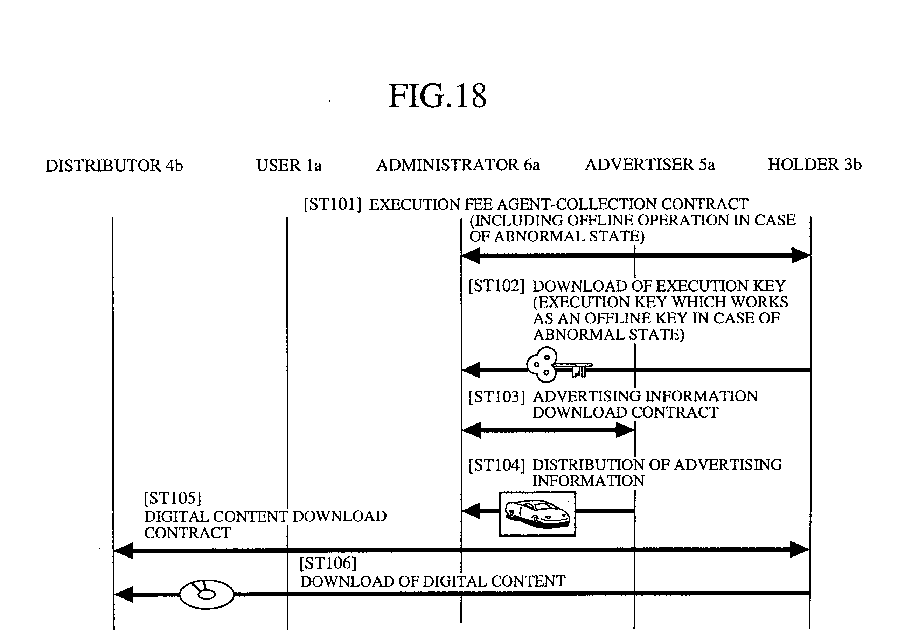

Figure 18 is a diagram showing a procedure of a preparation stage in the digital content billing system using the network 2 according to the fourth embodiment.

In a step ST101, the administrator 6a makes an agent-collection contract with the holder 3b to let the administrator 6a collect a digital content execution fee. This agent-collection contract includes a term that digital content used in the past can be used again in an offline operation in cases where an abnormal state occurs.

In a step ST102, the holder 3b downloads the execution key, which works as an offline key in case of an abnormal state, to the administrator 6a through the network 2 according to the agent-collection contract.

In a step ST103, the administrator 6a makes an advertising information download contract with the advertiser 5a for the downloading of the advertising information piece. In a step ST104, the advertiser 5a distributes the advertising information piece to the administrator 6a according to the advertising information download contract.

In a step ST105, the distributor 4b makes a digital content download contract with the holder 3b for the downloading of the digital content. In a step ST106, the holder 3b downloads the digital content, which is set to become usable by using the execution key, to the distributor 4b through the network 2 according to the digital content download contract.

A contract making order in the agent-collection contract for the collecting of the execution fee in the step ST101, the advertising information download contract in the step ST103 and the digital content download contract in the step ST105 is not limited to the above order, and any contract can be made at first. Also, it is applicable that the distributor 4b agree with the holder 3b. In this case, the steps ST105 and ST106 are omitted.

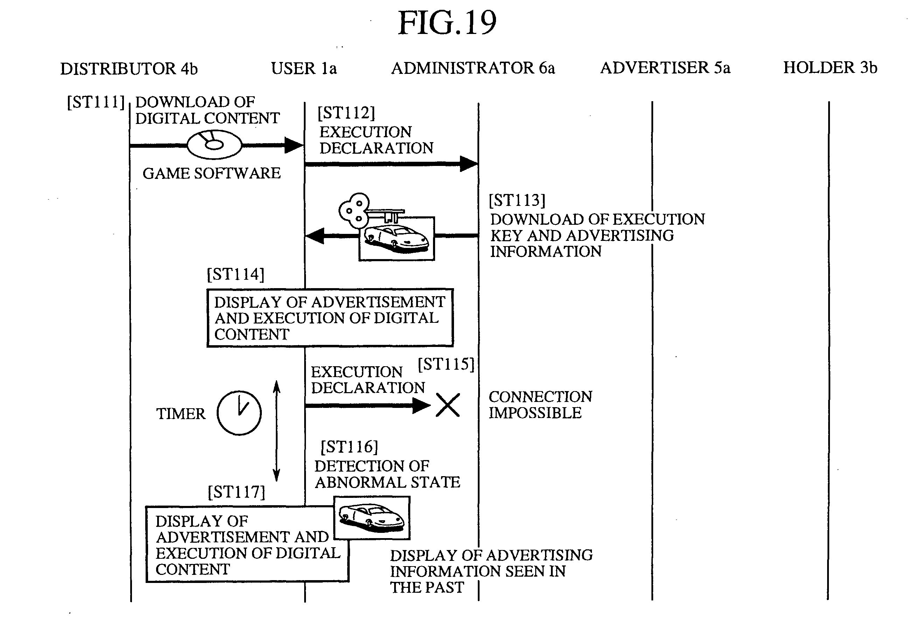

Figure 19 is a diagram showing a procedure of an execution stage of the digital content in the digital content billing system using the network 2 according to the fourth embodiment.

In a step ST111, the distributor 4b downloads digital content indicating a game software title, which is set to become usable by using the execution key, to the user 1a through the network 2. In a step ST112, the user 1a sends an execution declaration expressing the use of the digital content to the administrator 6a through the network 2.

In a step ST113, the administrator 6a downloads the execution key, which is received from the holder 3b and makes usable the digital content in an offline operation in case of the occurrence of an abnormal state, and the advertising information piece received from the advertiser 5a to the user 1a. In a step ST114, the user 1a uses the digital content by using the execution key downloaded from the administrator 6a while the user 1a sees the advertising information piece downloaded from the administrator 6a.

Thereafter, in a step ST115, the user 1a tries to again send the execution declaration expressing the use of the digital content to the administrator 6a through the network 2. In this case, the network 2 is not operated, or the server 6a of the administrator 6a is in a down condition. Therefore, the terminal 11a of the user 1a cannot be connected to the server 61a of the administrator 6a even though a prescribed time passes. In cases where the terminal 11a of the user la is not connected to the server 61a of the administrator 6a after a prescribed time passes, it is assumed in a step ST116 that the occurrence of an abnormal state is detected by the terminal 11a of the user 1a. Thereafter, in a step ST117, the user 1a again uses the digital content, which is made usable by the execution key downloaded in the step ST113, while seeing the advertising information piece downloaded in the step ST113.

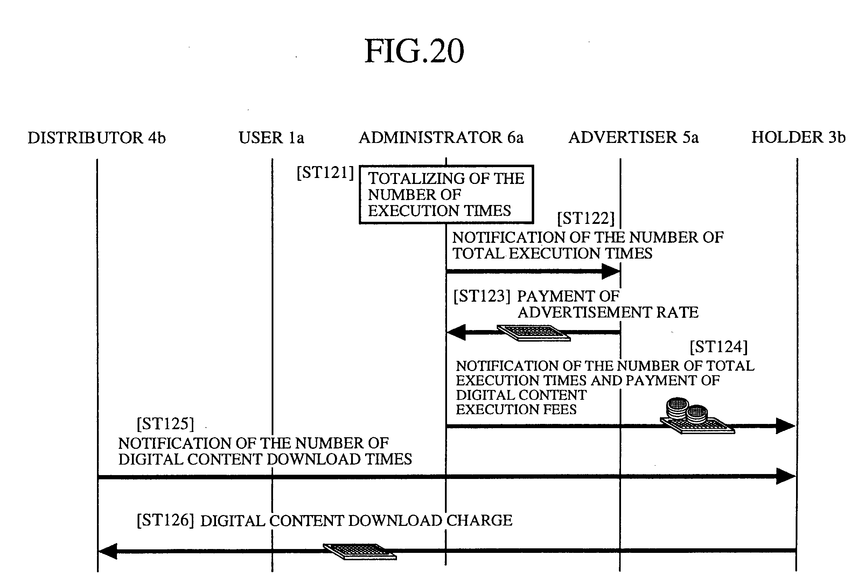

Figure 20 is a diagram showing a procedure of an account settlement stage in the digital content billing system using the network 2 according to the fourth embodiment.

In a step ST121, the administrator 6a totalizes execution times of the digital content to calculate the number of total execution times of the digital content used by the user 1a. In a step ST122, the administrator 6a notifies the advertiser 5a of the number of total execution times of the digital content in which the advertising information piece is inserted. In a step ST123, the advertiser 5a pays an advertisement rate, which corresponds to the number of total execution times of the digital content, to the administrator 6a. In a step ST124, the administrator 6a notifies the holder 3b of the number of total execution times of the digital content and pays a digital content execution fee, which corresponds to the number of total execution times of the digital content, to the holder 3b.

In a step ST125, the distributor 4b calculates the number of download times of the digital content and notifies the holder 3b of the number of download times of the digital content. In a step ST126, the holder 3b pays a digital content download charge, which corresponds to the number of download times of the digital content, to the distributor 4b.

Accordingly, in the fourth embodiment, in cases where the user 1a cannot be connected to the administrator 6a when the user 1a tries to send an execution declaration expressing the use of digital content to the administrator 6a, the user can enjoy the digital content, which is made usable by using an execution key downloaded in the past, while seeing an advertising information piece downloaded with the execution key in the past. Therefore, even though an abnormal state occurs in the digital content billing system using the network 2, the user can reliably use the digital content.

Also, in the fourth embodiment, because any user can use digital content without charge, the digital content provided by the holder 3b can be easily seen by many users, so that the holder 3b can obtain an execution fee corresponding to the number of execution times of the digital content.

Also, in the fourth embodiment, in cases where digital content downloaded from the distributor 4b to the user 1a is copied by the user 1a to use the copied digital content, it is required that the user 1a notifies the administrator 6a of the use of the digital content, so that the administrator 6a can reliably know the number of execution times of the digital content copied and used by the user 1a. Therefore, even though digital content downloaded to a user is copied by the user, the holder 3b can reliably obtain an execution fee for the copied digital content.

Also, in the fourth embodiment, because the administrator 6a permits the user 1a to use digital content when the administrator 6a receives an execution declaration expressing the use of the digital content from the user 1a, the administrator 6a can reliably grasp the number of execution times of the digital content used by the user 1a.

Also, in the fourth embodiment, it is not required that the administrator 6a collects an execution fee for digital content from the user 1a who uses the digital content. Therefore, even though a large number of users use the digital content, the administrator 6a can be released from a troublesome work in which the execution fee is collected from each of the users.

Also, in the fourth embodiment, the advertiser 5a can efficiently make the user 1a see the advertising information piece by only paying the advertisement rate to the administrator 6a.

### EMBODIMENT 5

The configuration of a digital content billing system using a network according to a fifth embodiment is the same as that shown in Fig. 1 of the first embodiment.

In this embodiment, in cases where the user 1a uses digital content made usable by an execution key downloaded in an offline operation in the past according to the fourth embodiment when the terminal 11a of the user 1a assumes the occurrence of an abnormal state because the user 1a cannot be connected to the administrator 6a even though a prescribed time passes, the user 1a notifies the administrator 6a of the use of the digital content in the offline operation when the connection of the user 1a with the administrator 6a is recovered after the disconnection of the user 1a with the administrator 6a.

An operation of the digital content billing system using the network according to the fifth embodiment is described.

A procedure of a preparation stage in the digital content billing system using the network 2 according to the fifth embodiment is the same as that shown in Fig.18 of the fourth embodiment.

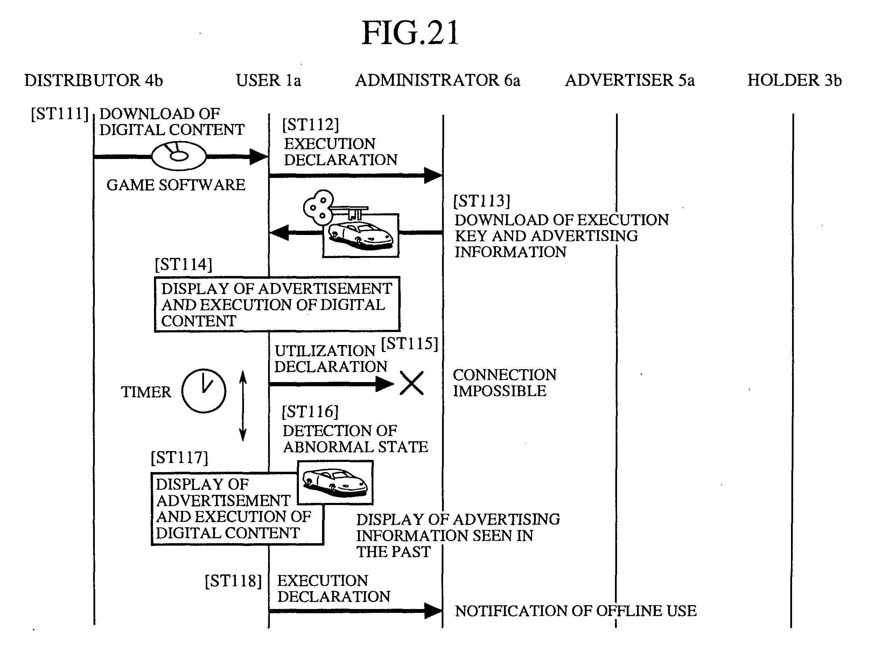

Figure 21 is a diagram showing a procedure of an execution stage of the digital content in the digital content billing system using the network 2 according to the fifth embodiment.

The steps ST111 to ST117 are performed in the same manner as those of Fig. 19 performed according to the fourth embodiment.

Thereafter, in a step ST118 of Fig. 21, the user 1a sends an execution notification to the administrator 6a. That is, the user 1a notifies the administrator 6a that the user la uses the digital content, which is made usable by the execution key downloaded in the past, in the offline operation while seeing the advertising information piece downloaded with the execution key in the past.

A procedure of an account settlement stage in the digital content billing system using the network 2 is the same as that shown in Fig. 20 of the fourth embodiment other than the step ST121.

In the step ST121, the administrator 6a totalizes execution times of the digital content, which is known according to the execution declaration of the user 1a in the step ST112, and execution times of the digital content, which is known according to the execution notification of the user 1a in the step ST118, and calculate the number of total execution times of the digital content used by the user 1a.

Accordingly, in the fifth embodiment, in addition to the effects obtained in the fourth embodiment, the administrator 6a can accurately grasp the number of execution times of the digital content used in the offline operation.

### EMBODIMENT 6

The configuration of a digital content billing system using a network according to a sixth embodiment is the same as that shown in Fig. 1 of the first embodiment.

An operation of the digital content billing system using the network according to the sixth embodiment is described.

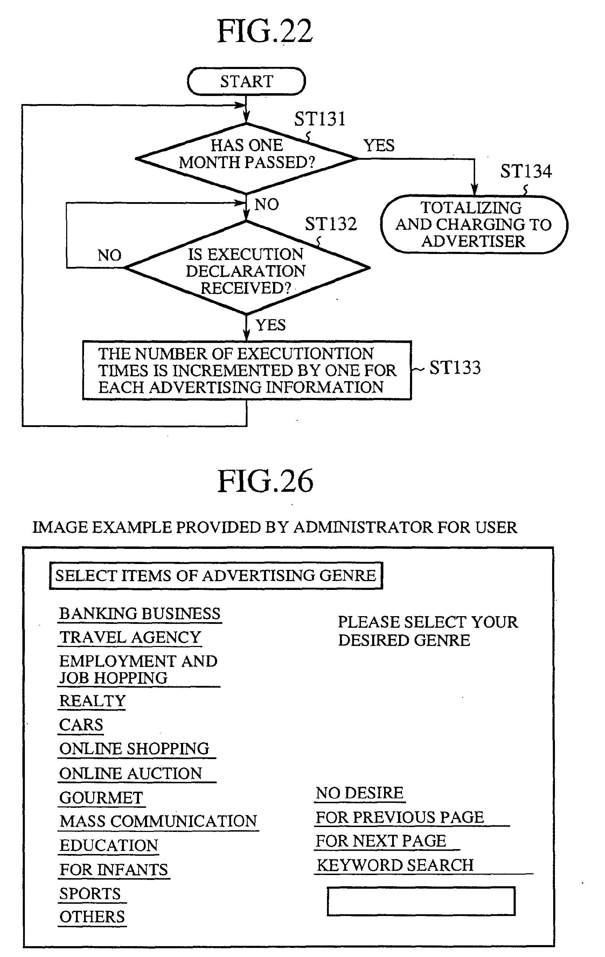

Figure 22 is a diagram showing a procedure of the determination of an advertisement rate in an account settlement stage in the digital content billing system using the network 2 according to the sixth embodiment. The advertisement rate determination procedure of Fig. 22 is performed in the server 61a of the administrator 6a.

In a step ST131, it is ascertained whether or not one month has passed after the determination of an advertisement rate previously performed. In cases where one month has not passed, it is checked in a step ST132 whether or not an execution declaration newly sent from the user 1a exists. In cases where the execution declaration exists, the number of execution times of the digital content, in which the advertising information piece is inserted, is incremented by one in a step ST133. Thereafter, the procedure returns to the step ST131.

In cases where one month has passed in the step ST131, a step ST 134 is performed. That is, the number of execution times of the digital content incremented for each execution declaration is set as the number of total execution times of the digital content, the administrator 6a notifies the advertiser 5a of the number of total execution times of the digital content to charge an advertisement rate corresponding to the number of total execution times of the digital content.

Accordingly, in the sixth embodiment, the administrator 6a can correctly determine the number of total execution times of the digital content used by the user 1a.

Also, because the advertiser 5a pays the advertisement rate determined in correspondence to the number of total execution times of the digital content correctly determined, there is no probability that the advertiser 5a pays an advertisement rate for the advertising information piece not seen by the user 1a, so that the advertiser 5a can rely on the administrator 6a without anxiety to download the advertising information piece to the user 1a.

In the sixth embodiment, the existence of the execution declaration is checked in the step ST132. However, in cases where an execution notification expressing the use of the digital content in the offline operation is sent from the user 1a to the administrator 6a according to the fifth embodiment, it is preferred that the existence of an execution declaration or an execution notification newly sent is checked in the step ST132.

### EMBODIMENT 7

The configuration of a digital content billing system using a network according to a seventh embodiment is the same as that shown in Fig. 1 of the first embodiment.

In this embodiment, the administrator 6a determines an advertising information piece to be downloaded to the user la according to contents of digital content of which the execution is declared by the user 1a as an execution declaration.

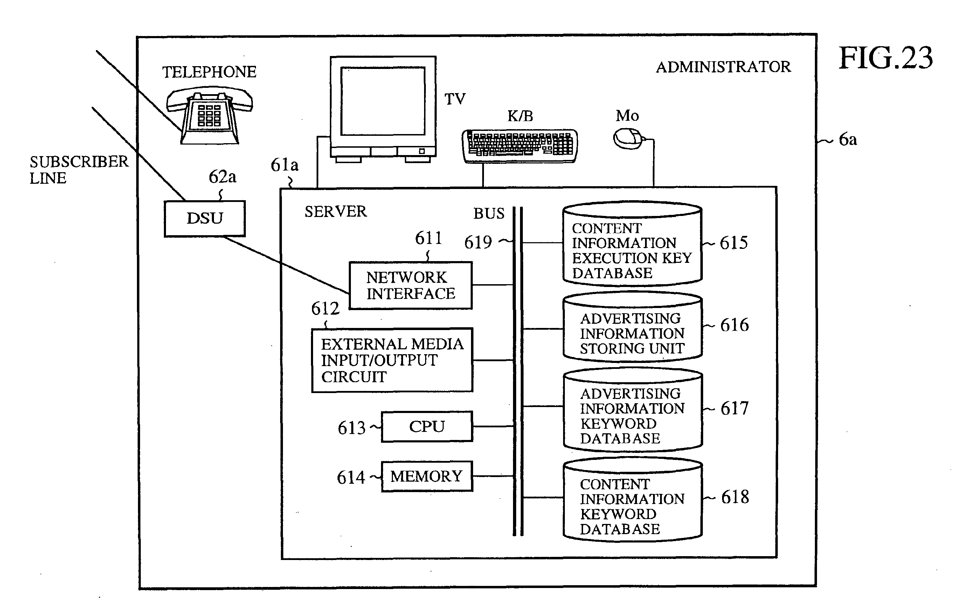

Figure 23 is a block diagram showing the configuration of the server 61a possessed by the administrator 6a.

In Fig. 23, a reference numeral 611 indicates a network interface connected to a digital service unit (DSU) 62a, and a reference numeral 612 indicates an external media input/output circuit connected to peripheral apparatuses such as a keyboard K/B, a mouse Mo, a display CRT and a television TV for monitoring digital content to be downloaded. A reference numeral 613 indicates a central processing unit (CPU) for controlling the whole processing of the server 61a, a reference numeral 614 indicates a memory for storing data to be used for the operation of the CPU 613, a reference numeral 615 indicates a content information execution key data base for registering an execution key corresponding to each file of digital content, a reference numeral 616 indicates an advertising information storing unit for storing advertising information pieces, a reference numeral 617 indicates an advertising information keyword data base for registering a keyword of each of the advertising information pieces stored in the advertising information storing unit 616, and a reference numeral 618 indicates a content information keyword data base for storing a keyword of each file of the digital content.

Next, an operation of the digital content downloading system using the network according to the seventh embodiment is described.

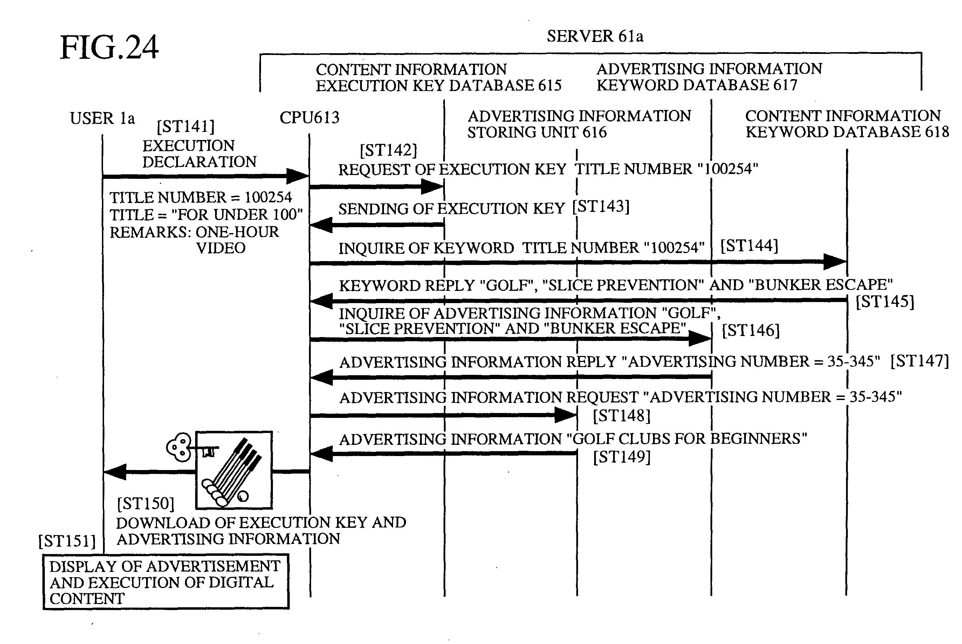

Figure 24 is a diagram showing a procedure of the determination of an advertising information piece in an execution stage of digital content in the digital content billing system using the network 2 according to the seventh embodiment.

In a step ST141, the user 1a sends an execution declaration expressing the use of a particular digital content, which is designated by a title number "100254" and a title "For Under 100 In Golf" and has a playback time period of one hour, to the CPU 613 of the server 61a of the administrator 6a. In a step ST142, the CPU 613 requires an execution key corresponding to the title number "100254" of the content information execution key data base 615. In a step ST143, the content information execution key data base 615 sends a particular execution key corresponding to the title number "100254" to the CPU 613.

In a step ST144, the CPU 613 inquires of the content information keyword data base 618 a keyword corresponding to the title number "100254". In a step ST145, the content information keyword data base 618 extracts keywords "golf", "slice prevention" and "bunker escape" corresponding to the title number "100254" and notifies the CPU 613 of the keywords "golf", "slice prevention" and "bunker escape". The keywords "golf", "slice prevention" and "bunker escape" indicates tastes and interests of the user 1a.

In a step ST146, the CPU 613 inquires of the advertising information keyword data base 617 one or more advertising information pieces corresponding to the keywords "golf", "slice prevention" and "bunker escape". In a step ST147, the advertising information keyword data base 617 extracts an advertising number "35-345" of a particular advertising information piece corresponding to the keywords "golf", "slice prevention" and "bunker escape" and notifies the CPU 613 of the advertising number "35-345".

In a step ST148, the CPU 613 requires the particular advertising information piece indicated by the advertising number "35-345" of the advertising information storing unit 616. In a step ST149, the advertising information storing unit 616 extracts the particular advertising information piece "Golf Clubs For Beginners" corresponding to the advertising number "35-345" and notifies the CPU 613 of the particular advertising information piece "Golf Clubs For Beginners". In a step ST150, the CPU 613 downloads the particular advertising information piece "Golf Clubs For Beginners" and the particular execution key obtained in the step ST143 to the user 1a. In a step ST151, the user 1a uses the particular digital content "For Under 100 In Golf" made usable by the particular execution key while seeing the particular advertising information piece "Golf Clubs For Beginners" downloaded from the administrator 6a.

Accordingly, in the seventh embodiment, because the administrator 6a grasps tastes and interests of the user 1a according to the particular digital content for which the user 1a sends the execution declaration to the administrator 6a, the advertiser 5a can efficiently makes the user 1a see the particular advertising information piece in which the user 1a takes an interest. Also, because the user 1a can see the particular advertising information piece in which the user 1a takes an interest, there is no probability that the user 1a sees an advertising information piece in which the user 1a takes no interest. Therefore, there is no probability that the user 1a feels a pain given by seeing an advertising information piece in which the user 1a takes no interest.

### EMBODIMENT 8

The configuration of a digital content billing system using a network according to an eighth embodiment is the same as that shown in Fig. 1 of the first embodiment.

In this embodiment, the user 1a specifies his desired genre of an advertising information piece planned to be downloaded to the user 1a.

Next, an operation of the digital content downloading system using the network according to the eighth embodiment is described.

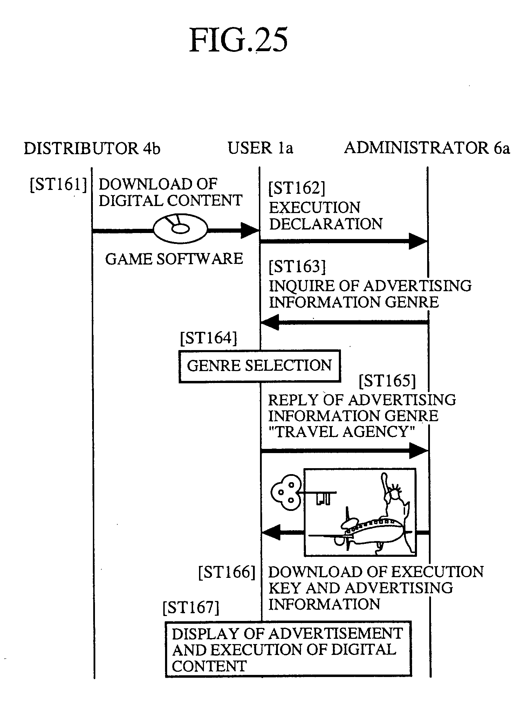

Figure 25 is a diagram showing a procedure of the determination of an advertising information piece in an execution stage of digital content in the digital content billing system using the network 2 according to the eighth embodiment.

In a step ST161, the distributor 4b downloads digital content indicating a game software title to the user 1a. In a step ST162, the user 1a sends an execution declaration of the digital content to the administrator 6a. In a step ST163, the administrator 6a inquires of the user 1a a genre of an advertising information piece to be downloaded to the user 1a.

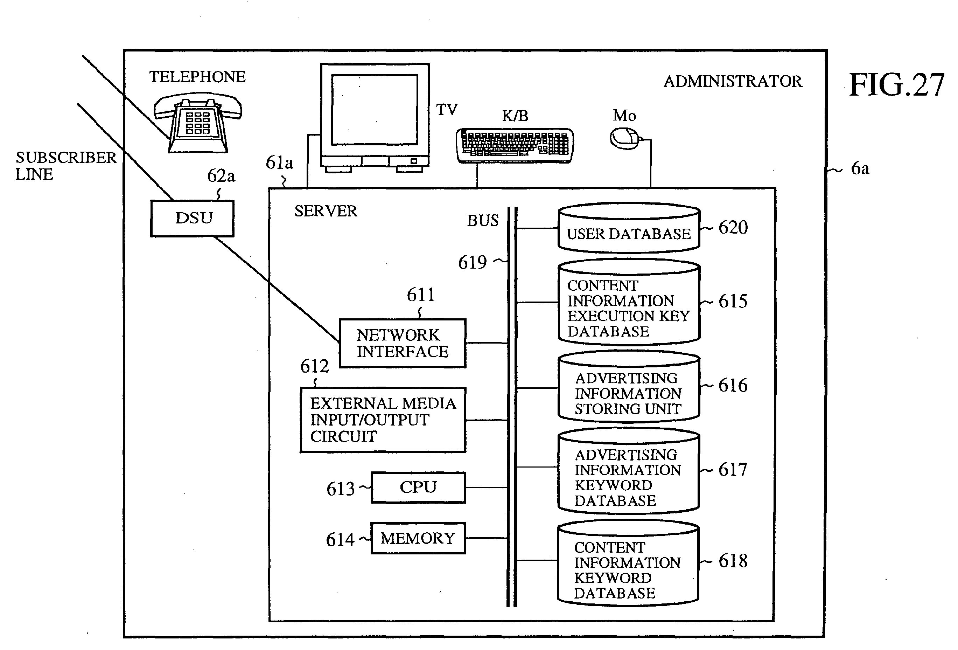

Figure 26 is a diagram showing an advertising information genre selection image used for the user 1a to determine a genre of an advertising information piece.

In a step ST164, the user 1a selects a "travel agency" as his desired genre from a plurality of advertising information genres of the advertising information genre selection image shown in Fig. 26. The user 1a desires to see an advertising information piece of his desired genre. In a step ST165, as a reply of the inquiry of the administrator 6a, the user 1a notifies the administrator 6a of the "travel agency" indicating the desired genre of the advertising information piece. In a step ST166, the administrator 6a downloads a particular advertising information piece related to the notified "travel agency" and a particular execution key of the digital content related to the execution declaration to the user 1a. In a step ST167, the user 1a uses the digital content made usable by the particular execution key while seeing the particular advertising information piece related to the "travel agency".

In this embodiment, the user 1a selects his desired genre of an advertising information piece to be downloaded to the user 1a. However, it is applicable that the user 1a specify a desired keyword of an advertising information piece to be downloaded to the user 1a.

Accordingly, in the eighth embodiment, because the user la selects his desired genre of an advertising information piece to be downloaded to the user 1a or because the user la specifies a desired keyword of an advertising information piece to be downloaded to the user 1a, the advertiser 5a can efficiently let the user 1a see the particular advertising information piece in which the user la takes an interest.

Also, because the user 1a can see the particular advertising information piece in which the user 1a takes an interest, there is no probability that the user 1a sees an advertising information piece in which the user 1a takes no interest. Therefore, there is no probability that the user 1a feels a pain given by seeing an advertising information piece in which the user 1a takes no interest.

### EMBODIMENT 9

The configuration of a digital content billing system using a network according to an ninth embodiment is the same as that shown in Fig. 1 of the first embodiment.

In this embodiment, a genre (or a keyword) of digital content used by the user 1a and a genre (or a keyword) of an advertising information piece selected by the user 1a are stored as records of the user 1a in the server 61a of the administrator 6a each time the user 1a uses the digital content while seeing the advertising information piece, tastes and interests of the user 1a are assumed according to the records of the user 1a obtained in the past, and an advertising information piece suitable for the tastes and interests of the user 1a is downloaded to the user 1a in a current time.

Figure 27 is a block diagram showing the configuration of the server 61a possessed by the administrator 6a according to the ninth embodiment.

In Fig. 27, a reference numeral 620 indicates a user data base for registering keywords of digital content used in the past by the user 1a. The other configuration is the same as that shown in Fig. 23 of the seventh embodiment.

Next, an operation of the digital content downloading system using the network 2 according to the ninth embodiment is described.

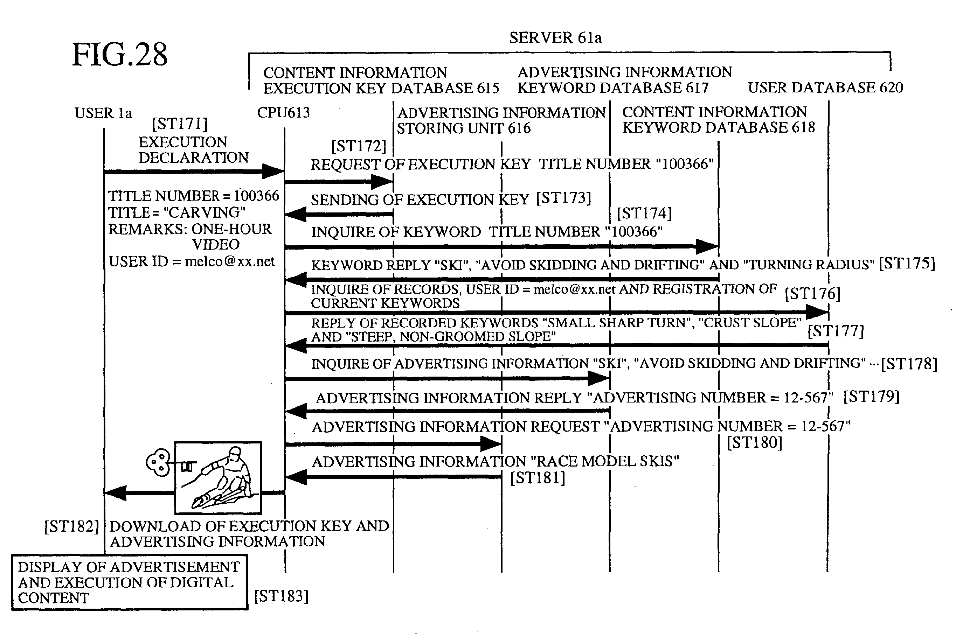

Figure 28 is a diagram showing a procedure of the determination of an advertising information piece in an execution stage of digital content in the digital content billing system using the network 2 according to the ninth embodiment.

In a step ST171, the user 1a sends an execution declaration expressing the use of a particular digital content, which is designated by a title number "100366" and a title "Carving" and has a playback time period of one hour, to the CPU 613 of the server 61a of the administrator 6a. In a step ST172, the CPU 613 requires an execution key corresponding to the title number "100366" of the content information execution key data base 615. In a step ST173, the content information execution key data base 615 sends a particular execution key corresponding to the title number "100366" to the CPU 613.

In a step ST174, the CPU 613 inquires of the content information keyword data base 618 a keyword corresponding to the title number "100366". In a step ST175, the content information keyword data base 618 extracts keywords "ski", "avoid skidding and drifting" and "turning radius" corresponding to the title number "100366" and notifies the CPU 613 of the keywords "ski", "avoid skidding and drifting" and "turning radius". The keywords "ski", "avoid skidding and drifting" and "turning radius" indicates tastes and interests of the user 1a.

In a step ST176, the CPU 613 notifies the user data base 620 of a particular user identifier (ID) of the user 1a to inquire of the user data base 620 records of the user 1a, and the CPU 613 makes the user data base 620 register the keywords "ski", "avoid skidding and drifting" and "turning radius" in correspondence to the particular user ID of the user 1a. Therefore, the keywords "ski", "avoid skidding and drifting" and "turning radius" are registered in the user data base 620 as records of the user 1a. In a step ST177, keywords "small sharp turn", "crust slope" and "steep, non-groomed slope", which correspond to the particular user ID and have been already registered, are extracted from the user data base 620 as the records of the user 1a, and the user data base 620 notifies the CPU 613 of the keywords "small sharp turn", "crust slope" and "steep, non-groomed slope".

In a step ST178, the CPU 613 inquires of the advertising information keyword data base 617 an advertising information piece indicated by the keywords "ski", "avoid skidding and drifting", "turning radius", "small sharp turn", "crust slope" and "steep, non-groomed slope". In a step ST179, the advertising information keyword data base 617 extracts an advertising number "12-567" of a particular advertising information piece corresponding to the keywords "ski", "avoid skidding and drifting", "turning radius", "small sharp turn", "crust slope" and "steep, non-groomed slope" and notifies the CPU 613 of the advertising number "12-567".

In a step ST180, the CPU 613 requires the particular advertising information piece indicated by the advertising number "12-567" of the advertising information storing unit 616. In a step ST181, the particular advertising information piece "Skis For Racers" corresponding to the advertising number "12-567" is extracted from the advertising information storing unit 616, and the advertising information storing unit 616 notifies the CPU 613 of the particular advertising information piece "Skis For Racers". In a step ST182, the CPU 613 downloads the particular advertising information piece "Skis For Racers" and the particular execution key obtained in the step ST173 to the user 1a. In a step ST183, the user 1a uses the particular digital content "Curving" made usable by the particular execution key while seeing the particular advertising information piece "Skis For Racers" downloaded from the administrator 6a.

Because a carving technique related to the particular digital content "Curving" used by the user 1a corresponds to all skiers ranging from beginners to competitors, it is difficult to assume a ski skill level of the user 1a according to one or more keywords (for example, the keywords "ski", "avoid skidding and drifting" and "turning radius") which are obtained from the digital content used by the user 1a. Therefore, the administrator 6a refers to the records (for example, the keywords "ski", "avoid skidding and drifting", "turning radius", "small sharp turn", "crust slope" and "steep, non-groomed slope") of the user la which are obtained from the digital content used by the user 1a in the past and current times and are registered in the user data base 620, the administrator 6a knows that the userla is, for example, a skier of an upper skill level, and the administrator 6a downloads the particular advertising information piece "Skis For Racers" to the user la because it is assumed that the user 1a of the upper skill level takes interest in many pairs of race model skies and intends to buy one pair of skis.

To register the records of the user 1a, there is a second method in which digital content used by the user 1a in the past is recorded in the user data base 620. However, the method of this embodiment, in which the keywords corresponding to the digital content used by the user 1a in the past are recorded in the user data base 620, is preferred to the second method for the protection of a user's privacy.

Accordingly, in the ninth embodiment, because the tastes and interests of the user 1a can be correctly grasped according to the records of the user 1a and the digital content currently used by the user 1a, there is no probability that the user 1a sees an advertising information piece in which the user 1a takes no interest. Therefore, there is no probability that the user 1a feels a pain given by seeing an advertising information piece in which the user 1a takes no interest.

Also, the advertiser 5a can efficiently makes the user la see the particular advertising information piece in which the user 1a takes an interest.

### EMBODIMENT 10

The configuration of a digital content billing system using a network according to a tenth embodiment is the same as that shown in Fig. 1 of the first embodiment.

Next, an operation of the digital content downloading system using the network 2 according to the tenth embodiment is described.

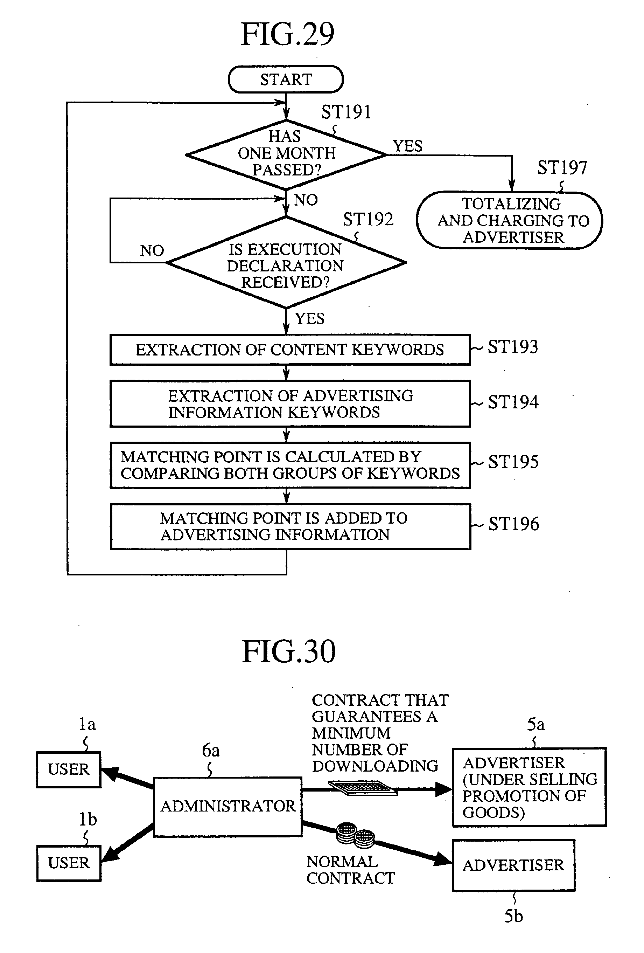

Figure 29 is a diagram showing a procedure of the determination of an advertisement rate in an account settlement stage in the digital content billing system using the network 2 according to the tenth embodiment. The advertisement rate determination procedure shown in Fig. 29 is performed in the server 61a of the administrator 6a.

In a step ST191, it is ascertained whether or not one month passes after the determination of an advertisement rate previously performed. In cases where one month does not pass, it is checked in a step ST192 whether or not an execution declaration of digital content newly sent from the user 1a exists. In cases where the execution declaration exists, one or more keywords of the digital content corresponding to the execution declaration are extracted in the content information keyword data base 618 in a step ST193. Thereafter, in a step ST194, one or more keywords of an advertising information piece downloaded to the user 1a to make the user 1a see the advertising information piece while using the digital content are extracted from the advertising information keyword data base 617.

In a step ST195, a first group of the keywords of the digital content extracted in the step ST193 are compared with a second group of the keywords of the advertising information piece extracted in the step ST194, and a matching point between the first group of the keywords and the second group of the keywords is calculated. As a matching point calculating method, for example, the number of keywords existing in both the groups is calculated, and a matching point corresponding to the number of keywords is determined.

In a step ST196, the matching point corresponding to one advertising information piece is added to a total matching point for each of advertising information pieces downloaded from the advertisers 5a and 5b. Thereafter, the procedure returns to the step ST191.

In cases where one month passes in the step ST191, a step ST197 is performed. That is, the number of total execution times of the digital content in which one advertising information piece is inserted is calculated in the same manner as in the sixth embodiment shown in Fig. 22 for each of the advertising information pieces downloaded from the advertisers 5a and 5b, the administrator 6a notifies each of the advertisers 5a and 5b of both the number of total execution times of the digital content, in which one advertising information piece downloaded from the corresponding advertiser is inserted, and the total matching point for the advertising information piece downloaded from the corresponding advertiser, and the administrator 6a charges an advertisement rate, which is determined by considering both the number of total execution times and the total matching point corresponding to one advertiser, to the advertiser for each of the advertisers 5a and 5b. Therefore, the administrator 6a can collect the advertisement rate for the advertising information piece, which is downloaded from one advertiser, from the advertiser for each of the advertisers 5a and 5b.

Accordingly, in the tenth embodiment, in cases where the administrator 6a downloads a particular advertising information piece, in which the user 1a takes interest, to the user 1a, the administrator 6a can collects a high advertisement rate for the particular advertising information piece from the advertiser 5a of the particular advertising information piece.

Also, in the tenth embodiment, because the advertiser 5a pays an advertisement rate, which is determined by considering both the number of total execution times of the digital content and the total matching point corresponding to the particular advertising information piece of the advertiser 5a, to the administrator 6a, there is no probability that the advertiser 5a pays an advertisement rate for an advertising information piece not seen by the user 1a, and there is no probability that the advertiser 5a pays a high advertisement rate for an advertising information. piece related to a low total matching point. Therefore, the advertiser 5a can rely on the administrator 6a to download an advertising information piece while the advertiser 5a is satisfied with a relationship between the advertisement rate and an effect of the advertising information piece on the user 1a.

### EMBODIMENT 11

The configuration of a digital content billing system using a network according to an eleventh embodiment is the same as that shown in Fig. 1 of the first embodiment.

In this embodiment, a low limit of the number of advertising information downloading times or a lowest ratio of the number of downloading times of a particular advertising information piece to the number of downloading times of all advertising information pieces is guaranteed by the administrator 6a according to a contract of an advertiser made with the administrator 6a. In this case, there is a probability that the particular advertising information piece of the advertiser is not downloaded to a user who takes no interest in the genre of the particular advertising information.

Next, an operation of the digital content downloading system using the network 2 according to the eleventh embodiment is described.

Figure 30 is a diagram showing a contract relationship between the administrator 6a and each advertiser according to the eleventh embodiment.

In Fig. 30, because the advertiser 5a strongly pushes forward the selling of particular goods, the advertiser 5a makes a minimum downloading guarantee type contract with the administrator 6a for the downloading of a particular advertising information piece. In this minimum downloading guarantee type contract, a minimum number of downloading times of the particular advertising information piece downloaded in a prescribed period from the administrator 6a to a plurality of users represented by the users 1a and 1b is guaranteed by the administrator 6a, or a minimum ratio of the number of downloading times of the particular advertising information piece to the number of downloading times of all advertising information pieces downloaded in a prescribed period from the administrator 6a to the users 1a and 1b is guaranteed by the administrator 6a. In contrast, the advertiser 5b makes a normal contract with the administrator 6a for the downloading of an advertising information piece.

The administrator 6a downloads the particular advertising information piece of the advertiser 5a to the users to guarantee the lowest number of downloading times of the particular advertising information piece or the low ratio of the number of downloading times of the particular advertising information piece according to the lowest download guarantee type contract, and the administrator 6a collects a high advertisement rate for the particular advertising information piece from the advertiser 5a.

In contrast, the administrator 6a downloads an advertising information piece of the advertiser 5b to the users without guaranteeing the number of downloading times of the advertising information piece or the low ratio of the number of downloading times of the advertising information piece, and the administrator 6a collects a low advertisement rate for the advertising information piece from the advertiser 5b.

Accordingly, in the eleventh embodiment, even though the advertisement rate for the particular advertising information piece of the advertiser 5a is high, because the advertiser 5a can expect a prescribed advertising effect required for the selling promotion of the particular goods, the advertiser 5a can rely on the administrator 6a without anxiety to download the particular advertising information piece to the users.

### EMBODIMENT 12

The configuration of a digital content billing system using a network according to a twelfth embodiment is the same as that shown in Fig. 1 of the first embodiment.

In this embodiment, an advertising information piece, of which content closely relate to a residential district of the user 1a, is downloaded to the user 1a.

Next, an operation of the digital content downloading system using the network according to the seventh embodiment is described.

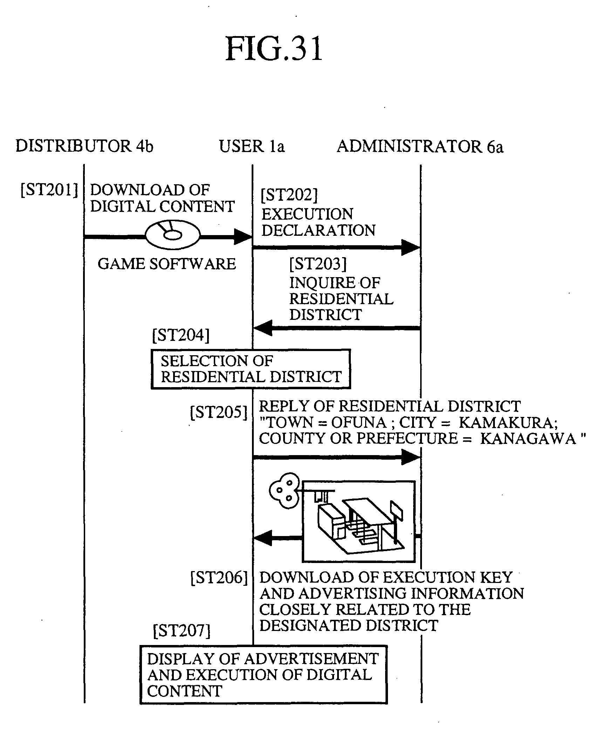

Figure 31 is a diagram showing a procedure of the determination of advertising information in an execution stage of digital content in the digital content billing system using the network 2 according to the twelfth embodiment.

In a step ST201, the distributor 4b downloads digital content indicating a game software title to the user 1a. In a step ST202, the user 1a sends an execution declaration of the digital content to the administrator 6a. In a step ST203, the administrator 6a inquires of the user 1a a residential district of the user 1a.

In a step ST204, the user 1a selects "Town = Ofuna , City = Kamakura, Country or Prefecture = Kanagawa" as the residential district of the user 1a. In a step ST205, the user 1a notifies the administrator 6a of the "Town = Ofuna , City = Kamakura, Country or Prefecture = Kanagawa" as a reply of the residential district. In a step ST206, the administrator 6a downloads a particular advertising information piece closely related to the residential district "Town = Ofuna , City = Kamakura, Country or Prefecture = Kanagawa" of the user 1a and a particular execution key of the digital content related to the execution declaration to the user 1a. A gasoline station newly opened in the residential district of the user 1a is, for example, introduced in the particular advertising information piece.

In a step ST207, the user 1a uses the digital content made usable by the particular execution key while seeing the particular advertising information piece closely related to the residential district of the user 1a.

In this embodiment, the user 1a selects the "Town = Ofuna , City = Kamakura, Country or Prefecture = Kanagawa" as the residential district of the user 1a and notifies the administrator 6a of the "Town = Ofuna , City = Kamakura, Country or Prefecture = Kanagawa". However, it is applicable that the user 1a specify his user ID and notify the administrator 6a of the user ID to make the server 61a of the administrator 6a extract a residential district of the user 1a from a residential district data base according to the user ID.

Accordingly, in the twelfth embodiment, the advertiser 5a closely related to a particular residential district can download his advertising information piece to the user 1a who resides in the same particular district. Therefore, the advertiser 5a can efficiently and effectively performs his advertisement for users residing in the district closely related to the advertiser 5a.

### EMBODIMENT 13

The configuration of a digital content billing system using a network according to a thirteenth embodiment is the same as that shown in Fig. 1 of the first embodiment.

In this embodiment, a regional advertising information piece, of which content closely relate to a residential district of the user 1a, and a nationwide advertising information piece are downloaded to the user 1a.

Next, an operation of the digital content downloading system using the network according to the thirteenth embodiment is described.

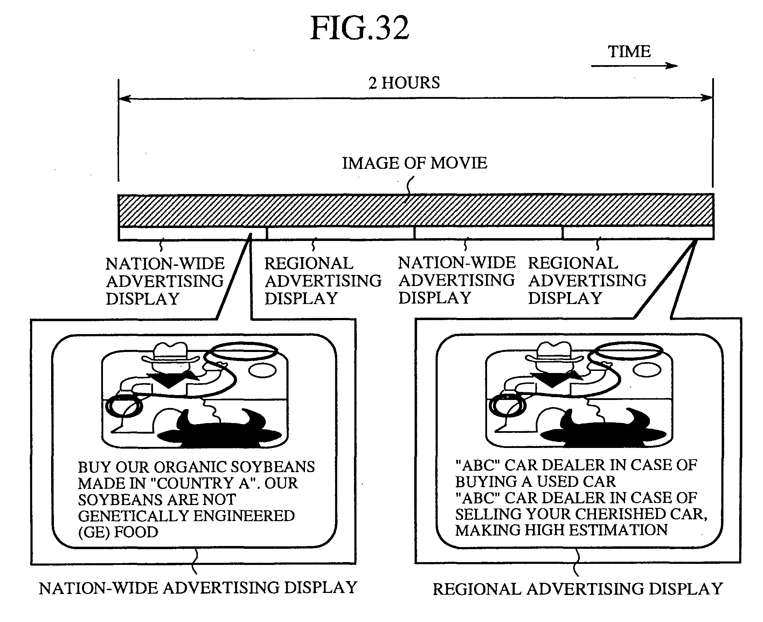

Figure 32 is a diagram showing a display example of digital content of a movie, a nationwide advertising information piece and a regional advertising information piece downloaded to the user 1a.

In Fig. 32, a nationwide advertising information piece, of which content relate to a special field, and a regional advertising information piece, of which content closely relate to a residential district of the user 1a are downloaded with an execution key to the user 1a, and the nationwide advertising information piece and the regional advertising information piece are alternately displayed at 30 minutes intervals with the image of the movie for 2 hours.

In this case, it is preferred that the special field of the nationwide advertising information piece is selected on condition that the user 1a takes interest in the special field.

Accordingly, in the thirteenth embodiment, because the nationwide advertising information piece and the regional advertising information piece are downloaded to the user 1a and are alternately displayed on the television TV of the user 1a, the user 1a can entertain the nationwide advertising information piece and the regional advertising information piece at high satisfactory.

### EMBODIMENT 14

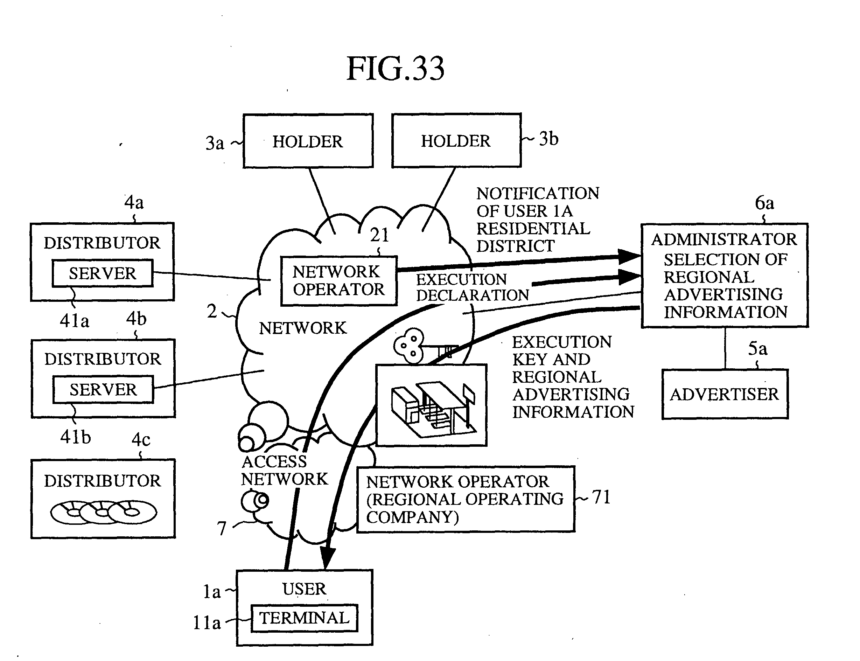

Figure 33 is a diagram showing the configuration of a digital content billing system using a network according to a fourteenth embodiment of the present invention.

In Fig. 33, a reference number 7 indicates an access network, and a reference number 71 indicates a network operator such as a regional operating company who manages the access network 7. The other configuration is the same as that shown in Fig. 1 of the first embodiment.

Next, an operation of the digital content downloading system using the network according to the fourteenth embodiment is described.

When the user 1a sends an execution declaration of digital content through the access network 7 managed by the network operator 71 and the network 2 managed by the network operator 21, the network operator 21 or 71 examines a residential district of the user 1a and notifies the administrator 6a of the residential district of the user 1a. In response to the residential district of the user 1a, the administrator 6a selects a regional advertising information piece which closely relates to the residential district of the user 1a and is downloaded from the advertiser 5a, and the administrator 6a downloads the regional advertising information piece and an execution key of the digital content to the user 1a. Therefore, though the user 1a does not send his residential district or his user' ID, the user 1a uses the digital content while seeing the regional advertising information piece closely related to the residential district of the user 1a.

In this embodiment, the network operator 21 or 71 notifies the administrator 6a of the residential district of the user 1a. However, to protect the privacy of the user 1a, it is applicable that the network operator 21 or 71 notifies the administrator 6a of a name of the regional operating company acting as the network operator 71 through which the user 1a is connected to the network 2.

Accordingly, in the fourteenth embodiment, it is not required that the user 1a notifies the administrator 6a of the residential district or the user's ID of the user la. Therefore, the user 1a can be released from a troublesomeness in which the user 1a notifies the administrator 6a of the residential district or the user's ID.

Also, the advertiser 5a can make the user 1a see the regional advertising information piece closely related to the user 1a without making the user 1a be conscious of his residential district.

### EMBODIMENT 15

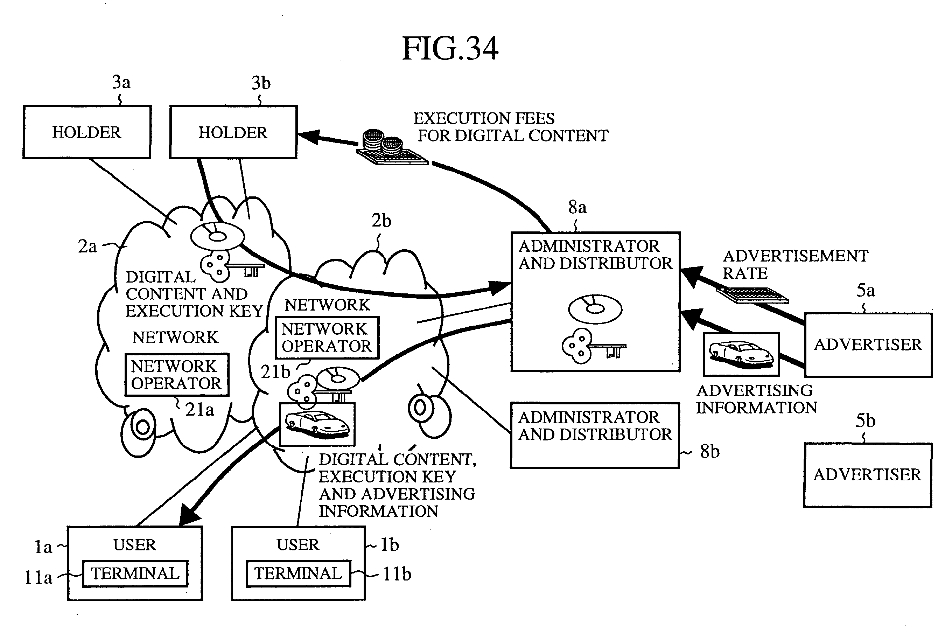

Figure 34 is a diagram showing the configuration of a digital content billing system using a network according to a fifteenth embodiment of the present invention.

In Fig. 34, reference numbers 2a and 2b indicate networks managed by a plurality of network operators 21a and 21b, a reference number 8a indicates an administrator and distributor, and a reference number 8b indicates an administrator and distributor. The users 1a and 1b, the holders 3a and 3b, the advertisers 5a and 5b are the same as those shown in Fig. 1 of the first embodiment.

In this embodiment, the administrator and distributor 8a and the administrator and distributor 8b respectively download digital content, an execution key of the digital content and an advertising information piece to each of the users 1a and 1b.

Next, an operation of the digital content downloading system using the network according to the fifteenth embodiment is described.

The administrator and distributor 8a makes a contract with the holder 3b, and the administrator and distributor 8a receives digital content and an execution key of the digital content from the holder 3b. Also, the administrator and distributor 8a makes a contract with the advertiser 5a, and the administrator and distributor 8a receives an advertising information piece from the advertiser 5a. When the user 1a sends an execution declaration of the digital content to the administrator and distributor 8a, the administrator and distributor 8a downloads the digital content, the execution key of the digital content and the advertising information piece to the user 1a. Thereafter, the administrator and distributor 8a collects an advertisement rate, which corresponds to the number of execution times of the digital content used by the user 1a, from the advertiser 5a. Also, the administrator and distributor 8a pays an execution fee, which corresponds to the number of execution times of the digital content used by the user 1a, to the holder 3b.

Accordingly, in the fifteenth embodiment, because the digital content, the execution key of the digital content and the advertising information piece are simultaneously downloaded to the user 1a, the user 1a can obtain the digital content in simultaneous with the sending of the execution declaration of the digital content.

From the aforegoing it may be understood that the present invention refers also to a method.

## Claims

1. A digital content billing system using a network, comprising:
a holder (3a, 3b) for having digital content and holding a right to let a third person use the digital content; a distributor (4a, 4b) for obtaining the digital content from the holder (3a, 3b) and distributing the digital content to a user (1a, 1b);
an advertiser (5a, 5b) for possessing an advertising information piece to be provided for the user (1a, 1b);and an administrator (6a, 6b) for obtaining the advertising information piece from the advertiser (5a, 5b) , receiving an execution declaration of the digital content from the user (1a, 1b), downloading the advertising information piece and a permission for the execution declaration to the user (1a, 1b) through the network, collecting an advertisement rate, which corresponds to the number of execution times of the digital content used by the user (1a, 1b), from the advertiser (5a, 5b) and paying an execution fee, which corresponds to the number of execution times of the digital content, to the holder (3a, 3b).

2. A digital content billing system using a network, comprising:
a holder (3a, 3b) for having digital content, which is set to become usable by an execution key, and holding a right to let a third person use the digital content;
a distributor for obtaining the digital content from the holder (3a, 3b)and distributing the digital content to a user (1a, 1b);
an advertiser (5a, 5b) for possessing an advertising information piece to be provided for the user (1a, 1b); and
an administrator (6a, 6b) for obtaining the execution key from the holder (3a, 3b), obtaining the advertising information piece from the advertiser (5a, 5b) , receiving an execution declaration of the digital content from the user (1a, 1b), downloading the advertising information piece and the execution key to the user (1a, 1b) through the network, collecting an advertisement rate, which corresponds to the number of execution times of the digital content used by the user (1a, 1b), from the advertiser (5a, 5b) and paying an execution fee, which corresponds to the number of execution times of the digital content, to the holder (3a, 3b).

3. A digital content billing system using a network according to claim 2, wherein the advertising information piece downloaded to the user (1a, 1b) is displayed simultaneously with the digital content in cases where the user (1a, 1b) uses the digital content by using the execution key downloaded to the user (1a, 1b).

4. A digital content billing system using a network according to any of claims 2 or 3, wherein the advertising information piece downloaded to the user (1a, 1b) is displayed in a time period between time periods in which the digital content is displayed in cases where the user (1a, 1b) uses the digital content by using the execution key downloaded to the user (1a, 1b).

5. A digital content billing system using a network according to any of claims 2 to 4, wherein the distributor notifies the holder (3a, 3b) of the number of download times of the digital content downloaded to the user (1a, 1b), and the holder (3a, 3b) pays a download' charge, which corresponds to the number of download times of the digital content, to the distributor.

6. A digital content billing system using a network according to any of claims 2 to 5, wherein the administrator (6a, 6b) downloads a plurality of advertising information pieces and the execution key, which permits the user (1a, 1b) to use the digital content prescribed times, to the user (1a, 1b) in cases where the administrator (6a, 6b) receives the execution declaration of the digital content from the user (1a, 1b).

7. A digital content billing system using a network according to any of claims 2 to 6, wherein the user (1a, 1b) uses the digital content by using an execution key downloaded from the administrator (6a, 6b) in the past while seeing an advertising information piece downloaded from the administrator (6a, 6b) in the past in cases where the execution key is not currently downloaded to the user (1a, 1b) from the administrator (6a, 6b) because of an abnormal state even though a prescribed time passes after the user (1a, 1b) sends the execution declaration of the digital content.

8. A digital content billing system using a network according to claim 7, wherein the user (1a, 1b) notifies the administrator (6a, 6b) that the user (1a, 1b) uses the digital content by using the execution key downloaded from the administrator (6a, 6b) in the past after the abnormal state is finished.

9. A digital content billing system using a network according to any of claims 2 to 8, wherein the advertising information piece downloaded from the administrator (6a, 6b) to the user (1a, 1b) corresponds to content of the digital content.

10. A digital content billing system using a network according to any of claims 2 to 9, wherein the administrator (6a, 6b) inquires the user (1a, 1b) of a genre of the advertising information piece to be downloaded to the user (1a, 1b) in cases where the administrator (6a, 6b) receives the execution declaration of the digital content from the user (1a, 1b), and the advertising information piece, of which a genre is selected by the user (1a, 1b), is downloaded to the user (1a, 1b).

11. A digital content billing system using a network according to any of claims 2 to 10, wherein the administrator (6a, 6b) downloads the advertising information piece, which corresponds to content of another digital content used by the user (1a, 1b) in the past, to the user (1a, 1b) in cases where the administrator (6a, 6b) receives the execution declaration of the digital content from the user (1a, 1b).

12. A digital content billing system using a network according to any of claims 2 to 11, wherein the administrator (6a, 6b) collects the advertisement rate, which is determined according to a matching point between content of the digital content related to the execution declaration of the user (1a, 1b) and content of the advertising information piece downloaded from the administrator (6a, 6b) to the user (1a, 1b), from the advertiser (5a, 5b).

13. A digital content billing system using a network according to any of claims 2 to 12, wherein the administrator (6a, 6b) guarantees the advertiser (5a, 5b) the lowest number of downloading times of the advertising information piece downloaded to the user (1a, 1b) or a lowest ratio of the number of downloading times of the advertising information piece downloaded to the user (1a, 1b) to the number of downloading times of all advertising information pieces received from the advertiser (5a, 5b).

14. A digital content billing system using a network according to any of claims 2 to 13, wherein the administrator (6a, 6b) inquires the user (1a, 1b) of a residential district of the user (1a, 1b) in cases where the administrator (6a, 6b) receives the execution declaration of the digital content from the user (1 a, 1b), and the administrator (6a, 6b) downloads the digital content, which closely relates to the residential district of the user (1a, 1b), to the user (1a, 1b).

15. A digital content billing system using a network according to any of claims 2 to 14, wherein the administrator (6a, 6b) downloads the digital content, which closely relates to a residential district of the user (1a, 1b), and a nation-wide digital content to the user (1a, 1b) in cases where the administrator (6a, 6b) receives the execution declaration of the digital content from the user (1a, 1b)

16. A digital content billing system using a network, according to any of claims 2 to 15, wherein the administrator (6a, 6b) downloads the digital content closely related to a residential district of the user (1a, 1b), which is notified by a network operator managing the network, to the user (1a, 1b) in cases where the administrator (6a, 6b) receives the execution declaration of the digital content from the user (1a, 1b).

17. A digital content billing system using a network, comprising:
an advertiser (5a, 5b) for possessing an advertising information piece to be provided for a user (1a, 1b); a holder (3a, 3b) for receiving the advertising information piece from the advertiser (5a, 5b), having digital content, which is set to become usable by an execution key, and holding a right to let a third person use the digital content;
a distributor for obtaining the digital content, in which the advertising information piece is included, from the holder (3a, 3b) and distributing the digital content with
the advertising information piece to the user (1a, 1b);
and
an administrator (6a, 6b) for obtaining the execution key from the holder (3a, 3b), receiving an execution declaration of the digital content from the user (1a, 1b) downloading the execution key to the user (1a, 1b) through the network, and notifying the advertiser (5a, 5b) of the number of execution times of the digital content used by the user (1a, 1b), wherein the holder (3a, 3b) collects an advertisement rate, which corresponds to the number of execution times of the digital content used by the user (1a, 1b), from the advertiser (5a, 5b), and the holder (3a, 3b) pays a download charge, which corresponds to the number of download times of the execution key downloaded from the administrator (6a, 6b) to the user (1a, 1b), to the administrator (6a, 6b).

18. A digital content billing system using a network according to claim 17, wherein the distributor notifies the holder (3a, 3b) of the number of download times of the digital content downloaded to the user (1a, 1b), and the holder (3a, 3b) pays a download charge, which corresponds to the number of download times of the digital content, to the distributor.

19. A digital content billing system using a network, comprising:
a holder (3a, 3b) for having digital content, which is set to become usable by an execution key, and holding a right to let a third person use the digital content;
an advertiser (5a, 5b) for possessing an advertising information piece to be provided for a user (1a, 1b); and
an administrator and distributor (8a, 8b) for obtaining the digital content and the execution key from the holder (3a, 3b), receiving the advertising information piece from the advertiser (5a, 5b), receiving an execution declaration of the digital content from the user (1a, 1b), downloading the digital content, the execution key and the advertising information piece to the user (1a, 1b) through the network in response to the execution declaration, collecting an advertisement rate, which corresponds to the number of execution times of the digital content used by the user (1a, 1b), from the advertiser (5a, 5b), and paying an execution fee, which corresponds to the number of execution times of the digital content used by the user (1a, 1b), to the holder (3a, 3b).
